(19) Europäisches Patentamt
European Patent Office
Office européen des brevets

(11) **EP 4 502 911 A1**

(12) **EUROPEAN PATENT APPLICATION**
published in accordance with Art. 153(4) EPC

(43) Date of publication:
**05.02.2025 Bulletin 2025/06**

(21) Application number: **23774357.0**

(22) Date of filing: **21.02.2023**

(51) International Patent Classification (IPC):
**G06Q 50/02** (2024.01)

(52) Cooperative Patent Classification (CPC):
**G06Q 50/02**

(86) International application number:
**PCT/JP2023/006265**

(87) International publication number:
**WO 2023/181758 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022048685**

(71) Applicant: **NATIONAL AGRICULTURE AND FOOD RESEARCH ORGANIZATION**
**Tsukuba-shi, Ibaraki 305-8517 (JP)**

(72) Inventors:
• **SUGIYAMA, Tomomi**
**Tsukuba-shi, Ibaraki 305-8519 (JP)**
• **KAKEI, Yusuke**
**Tsukuba-shi, Ibaraki 305-8519 (JP)**
• **ISOZAKI, Masahide**
**Tsukuba-shi, Ibaraki 305-8519 (JP)**

(74) Representative: **Haseltine Lake Kempner LLP**
**Cheapside House**
**138 Cheapside**
**London EC2V 6BJ (GB)**

(54) **AGRICULTURAL ASSISTANCE PROGRAM, AGRICULTURAL ASSISTANCE METHOD, AND AGRICULTURAL ASSISTANCE DEVICE**

(57)     To predict growth using an initial value that can be easily input and output information for supporting selection of a cultivar and cultivation management, a simulation unit 44 receives an input of an initial value of the number of leaves of a seedling of a crop and an initial value of a weight of the seedling, reads a parameter indicating characteristics of cultivars of the crop from a parameter DB 50, acquires information on a cultivation environment of a crop, creates a growth model for each of the cultivars based on the initial value of the number of leaves of the seedling, the initial value of the weight of the seedling, the parameter, and information on the cultivation environment, and predicts growth for each of the cultivars from the growth model for each of the cultivars. Then, an output unit 45 outputs a prediction result obtained by the prediction as information for supporting selection of a cultivar or cultivation management.

[FIG. 3]

## Description

[TECHNICAL FIELD]

The present invention relates to an agricultural support program, an agricultural support method, and an agricultural support device.

[BACKGROUND ART]

Conventionally, in catalogs and other publications containing information on agricultural products, the characteristics and properties of each cultivar are generally expressed in words, images, average values, and so on. Therefore, when selecting a cultivar to be cultivated, agricultural workers refer to the characteristics and properties of each cultivar expressed by words, images, average values, and the like.
In recent years, a technique has been known in which, when a user specifies a cultivation location, a cultivation time, and an item, a list of cultivars that can be cultivated in the specified cultivation location and time among those of the specified item is displayed (for example, see Patent Document 1).

[PRIOR ART DOCUMENT]

[PATENT DOCUMENT]

[Patent Document 1] Japanese Patent Application Laid-Open No. 2002-203002

[SUMMARY OF THE INVENTION]

[PROBLEMS TO BE SOLVED BY THE INVENTION]

However, since only typical characteristics and properties of the cultivars are published in the catalog, it is not possible to accurately know whether the cultivar is suitable for the place where the cultivar is to be cultivated and the environmental conditions. As a result, there is a risk that crops may not grow as expected when actually cultivated. Even if the cultivars are listed as in Patent Document 1, it is difficult to determine which cultivar should be actually cultivated.
In addition, although research on a method of predicting the growth of agricultural products using a growth model has been advanced recently, some initial values input to the growth model by the producer are difficult to measure accurately or are troublesome to measure.
An object of the present invention is to provide an agricultural support program, an agricultural support method, and an agricultural support device capable of predicting growth by using an initial value easy to input and outputting information for supporting selection of a cultivar or cultivation management.

[MEANS FOR SOLVING THE PROBLEMS]

In one aspect, an agricultural support program is a program that causes a computer to execute a process, the process including: receiving an input of an initial value of the number of leaves of a seedling of a crop and an initial value of a weight of the seedling; reading a parameter indicating characteristics of cultivars of the crop from a storage unit; acquiring information on a cultivation environment of a crop; creating a growth model for each of the cultivars based on the initial value of the number of leaves of the seedling, the initial value of the weight of the seedling, the parameter, and information on the cultivation environment, and predicting growth for each of the cultivars from the growth model for each of the cultivars; and outputting a prediction result obtained by the predicting as information for supporting selection of a cultivar or cultivation management.

[EFFECTS OF THE INVENTION]

The agricultural support program, the agricultural support method, and the agricultural support device of the present invention have an advantage in predicting growth using an initial value that is easy to input, and outputting information for supporting selection of a cultivar or cultivation management.

[BRIEF DESCRIPTION OF THE DRAWINGS]

[FIG. 1] FIG. 1 illustrates a configuration of an agricultural system according to an embodiment.

[FIG. 2] FIG. 2(a) illustrates a hardware configuration of a user terminal in FIG. 1, and FIG. 2(b) illustrates a hardware configuration of a server in FIG. 1.

[FIG. 3] FIG. 3 is a functional block diagram of the server.

[FIG. 4] FIG. 4 is a flowchart illustrating a process of the server.

[FIG. 5] FIG. 5 illustrates an outline of a growth model.

[FIG. 6] FIG. 6 is a view conceptually illustrating a change in crop size in a simulation.

[FIG. 7] FIG. 7 illustrates the relationship between the growth stage and the size of leaves and stems in relative values.

[FIG. 8] FIG. 8 illustrates an example of meteorological data used in the simulation.

[FIG. 9] FIG. 9 illustrates an example of parameters used in the simulation.

[FIG. 10] FIG. 10(a) and FIG. 10(b) are diagrams conceptually illustrating the leaf growth process and the fruit growth process in the present simulation.

[FIG. 11] FIG. 11 is a view (part 1) illustrating a screen for displaying a simulation result.

[FIG. 12] FIG. 12 is a view (part 2) illustrating the screen for displaying the simulation result.

[FIG. 13] FIG. 13(a) and FIG. 13(b) are views (part 3) illustrating the screen for displaying the simulation result.

[FIG. 14] FIG. 14 is a view (part 4) illustrating the screen for displaying the simulation result.

[FIG. 15] FIG. 15 is a flowchart illustrating an example of a process of an updating unit.

[MODES FOR CARRYING OUT THE INVENTION]

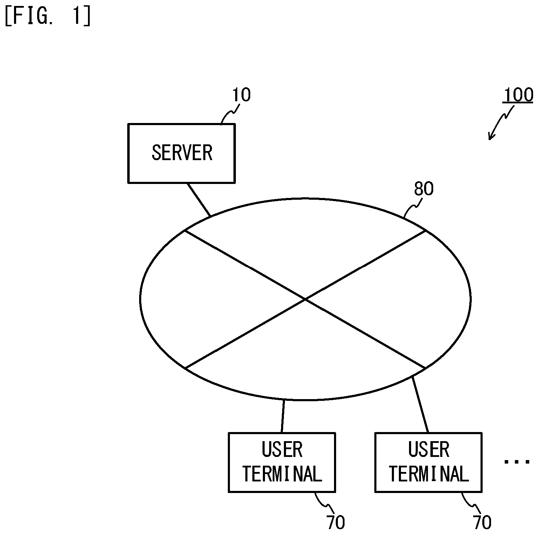

Hereinafter, an embodiment of an agricultural system will be described in detail with reference to FIG. 1 to FIG. 15. FIG. 1 schematically illustrates a configuration of an agricultural system 100 according to an embodiment. The agricultural system 100 of the present embodiment is a system for providing information for supporting selection of cultivars and cultivation management to a farmer or the like (hereinafter referred to as "producer") when the farmer or the like cultivates fruits and vegetables such as tomatoes, strawberries, cucumbers, and paprika. In the present embodiment, a case of a producer who cultivates strawberries will be described.

As illustrated in FIG. 1, the agricultural system 100 includes a server 10 as an agricultural support device and user terminals 70. The user terminal 70 is a terminal such as a personal computer (PC), a tablet terminal, or a smartphone used by the producer. The server 10 and the user terminal 70 are connected to a network 80 such as the Internet, and information can be exchanged between the devices.

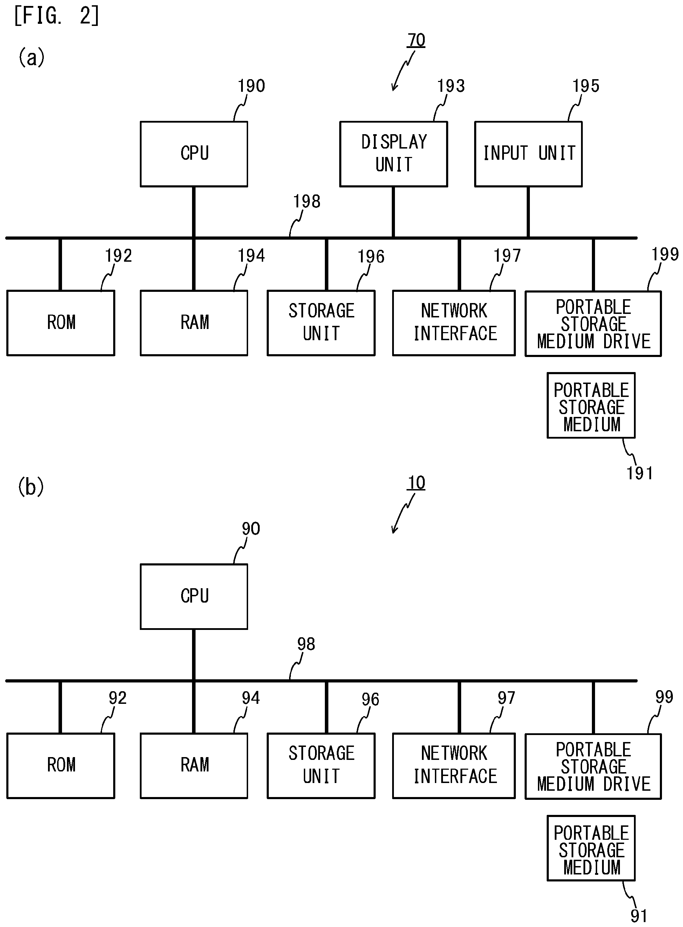

The user terminal 70 transmits the information input by the producer to the server 10. FIG. 2(a) illustrates a hardware configuration of the user terminal 70. As illustrated in FIG. 2(a), the user terminal 70 includes a CPU (Central Processing Unit) 190, a ROM (Read Only Memory) 192, a RAM (Random Access Memory) 194, a storage unit (here, an SSD (Solid State Drive) or an HDD (Hard Disk Drive)) 196, a network interface 197, a display unit 193, an input unit 195, a portable storage medium drive 199 capable of reading a portable storage medium 191, and the like. These components of the user terminal 70 are connected to a bus 198. The display unit 193 includes a liquid crystal display or the like, and the input unit 195 includes a keyboard, a mouse, a touch panel, or the like.

The server 10 is a device that acquires information from the user terminal 70, generates information for supporting selection of the cultivar of the strawberry and cultivation management based on the acquired information, and outputs a screen for displaying the information to the user terminal 70 used by the producer.

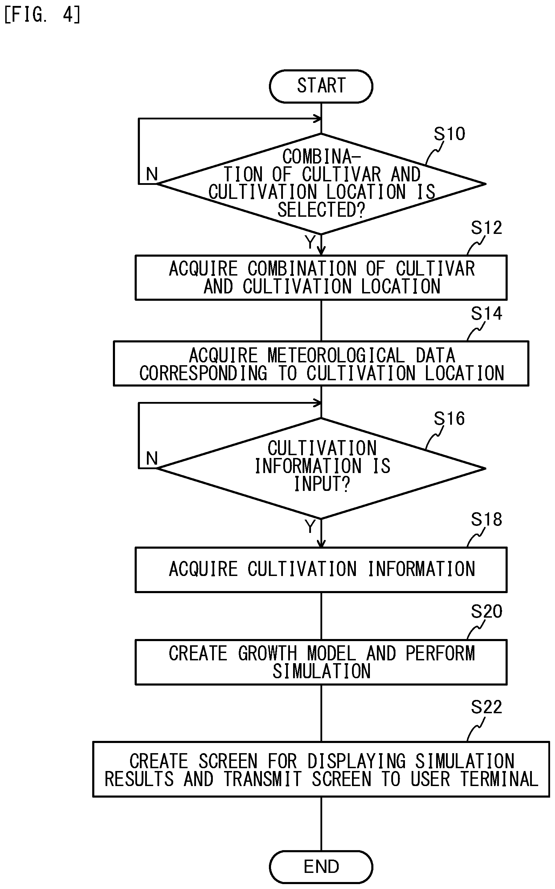

FIG. 2(b) illustrates a hardware configuration of the server 10. As illustrated in FIG. 2(b), the server 10 includes a CPU 90 as a computer, a ROM 92, a RAM 94, a storage unit (here, an SSD or an HDD) 96, a network interface 97, a portable storage medium drive 99, and the like. These components of the server 10 are connected to a bus 98. In the server 10, the CPU 90 executes a program (including a cultivation assistance program) stored in the ROM 92 or the HDD 96, or a program (including the cultivation assistance program) read from a portable storage medium 91 by the portable storage medium drive 99, thereby implementing the functions of the respective units illustrated in FIG. 4. The functions of the units in FIG. 4 may be implemented by an integrated circuit such as an application specific integrated circuit (ASIC) or a field programmable gate array (FPGA).

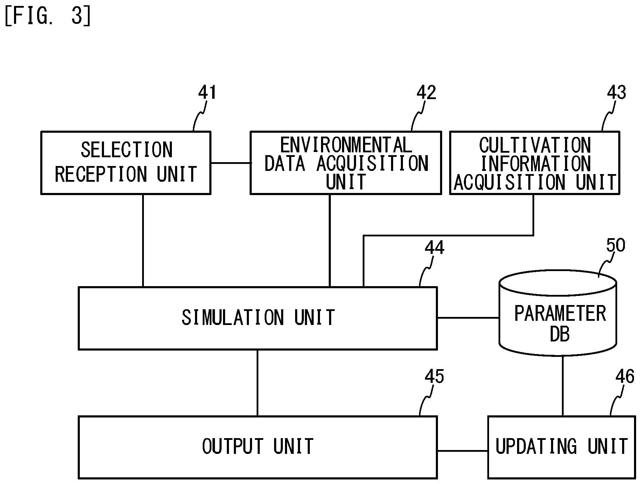

FIG. 3 is a functional block diagram of the server 10. In the server 10, the CPU 90 executes the program to function as a selection reception unit 41, an environmental data acquisition unit 42, a cultivation information acquisition unit 43, a simulation unit 44, an output unit 45, and an updating unit 46, as illustrated in FIG. 3. FIG. 3 also illustrates a parameter DB 50 as a storage unit stored in the storage unit 96 or the like of the server 10.

The selection reception unit 41 receives information on a combination of a cultivar (for example, Tochiotome, Koiminori, or the like) and a cultivation location (for example, Tsukuba, Morioka, Kurume, or the like) selected by the producer. The producer may select one combination of the cultivar and the location or may select a plurality of combinations. The selection reception unit 41 transmits the received information to the simulation unit 44.

The environmental data acquisition unit 42 acquires environmental data at the cultivation location based on the information on the cultivation location received by the selection reception unit 41. The environmental data acquisition unit 42 acquires data corresponding to the selected cultivation location from past meteorological data and future meteorological data (prediction data) managed in the server 10 or a device other than the server 10. The meteorological data includes data such as outside solar radiation and outside temperature, solar radiation and temperature in a greenhouse, humidity, $CO_2$ concentration, soil temperature, and soil moisture. The environmental data acquisition unit 42 transmits the acquired data to the simulation unit 44.

The cultivation information acquisition unit 43 acquires cultivation information (for example, planting date, cultivation density, soil cultivation/solution cultivation, number of leaves at planting, seedling weight at planting (fresh weight (gFW)), amount of applied fertilizer, culture medium concentration, and the like) input by the producer. The cultivation information acquisition unit 43 transmits the acquired information to the simulation unit 44.

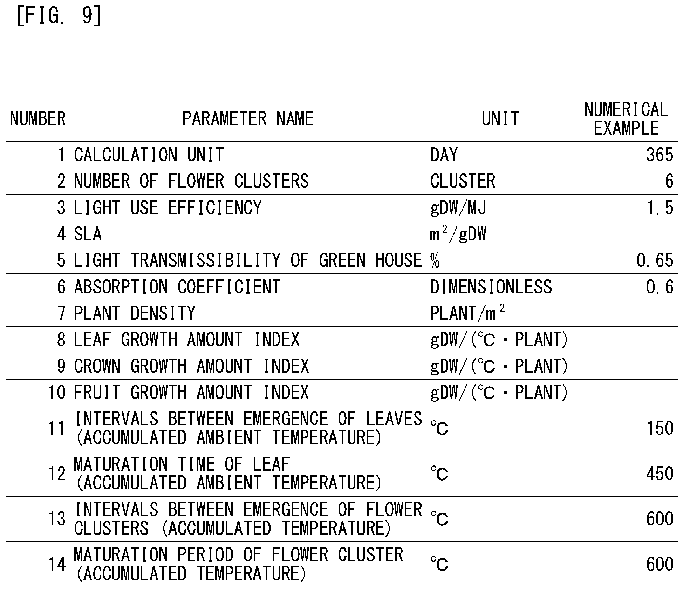

The simulation unit 44 reads, from the parameter DB 50, the parameters corresponding to the cultivar received by the selection reception unit 41, and creates a growth model using the read parameters and the data transmitted from the environmental data acquisition unit 42 and the cultivation information acquisition unit 43. Here, the parameters stored in the parameter DB 50 are parameters as illustrated in FIG. 9, for example, and are determined for each cultivar. Then, the simulation unit 44 executes a simulation on the growth of the crop when the cultivar selected by the producer is cultivated at the cultivation location and by the cultivation method selected by the producer, using the created growth model. Obtained as the results of the simulation by the simulation unit 44 are the leaf area, the flowering date of each flower cluster, the yield of each flower cluster, the fruit dry matter distribution ratio, the photoassimilate, the growth amount (stems and leaves), the growth amount (fruit), the nutrient absorption amount (fertilizer application amount), and the like. The simulation unit 44 transmits the simulation result to the output unit 45.

The output unit 45 generates a screen for displaying the simulation results received from the simulation unit 44, and transmits the screen to the user terminal 70 used by the producer. At this time, the output unit 45 summarizes the simulation results for respective cultivation conditions (combinations of the cultivar, the cultivation location, and the cultivation information) and generates a screen that displays the simulation results for different cultivation conditions in a comparable manner.

The updating unit 46 acquires information on the actually cultivated cultivar and cultivation results (for example, leaf area, flowering date of each flower cluster, yield of each flower cluster, and the like) from the producer. Then, the updating unit 46 updates the parameters stored in the parameter DB 50 so that the actual cultivation results and the simulation results are close to each other. The updating unit 46 may determine whether to update the parameters using the actual cultivation results based on the reliability predetermined for the producer who has input the actual cultivation result.

(Process by Server 10)

Next, a process by the server 10 will be described in detail.

FIG. 4 is a flowchart illustrating a process by the server 10. In the process of FIG. 4, first, in step S10, the selection reception unit 41 waits until the producer selects a combination of a cultivar and a cultivation location on the user terminal 70. Here, for example, it is assumed that the combinations of "Tochiotome/Tsukuba", "Tochiotome/Morioka", "Koiminori/Tsukuba", "Oi-C berry/Tsukuba", and "Sachinoka/Kurume" are selected by the producer.

When the determination in step S10 is affirmed, in next step S12, the selection reception unit 41 acquires the selected combination of the cultivar and the cultivation location, and transmits the combination to the environmental data acquisition unit 42 and the simulation unit 44.

Next, in step S14, the environmental data acquisition unit 42 acquires the meteorological data (past data and prediction data) at the cultivation location based on the cultivation location selected by the producer, which has been received by the selection reception unit 41.

Next, in step S16, the cultivation information acquisition unit 43 waits until cultivation information (for example, planting time, planting density, soil cultivation/nutrient cultivation, the number of leaves at planting, and weight of seedling at planting) is input by the producer. When the producer inputs the cultivation information, the process proceeds to step S18, and the cultivation information acquisition unit 43 acquires the input cultivation information and transmits the cultivation information to the simulation unit 44.

Next, in step S20, the simulation unit 44 reads the parameters of each of the cultivars selected by the producer, which are stored in the parameter DB 50, and creates growth models corresponding to the respective selected combinations of the cultivar and the cultivation location based on the parameters, the meteorological data information acquired by the environmental data acquisition unit 42, and the cultivation information acquired by the cultivation information acquisition unit 43.

Then, the simulation unit 44 executes simulations using the created growth models, and obtains simulation results indicating how each cultivar grows at each cultivation location. The growth models created by the simulation unit 44 and the simulation results will be described in detail later. The simulation unit 44 transmits the simulation results to the output unit 45.

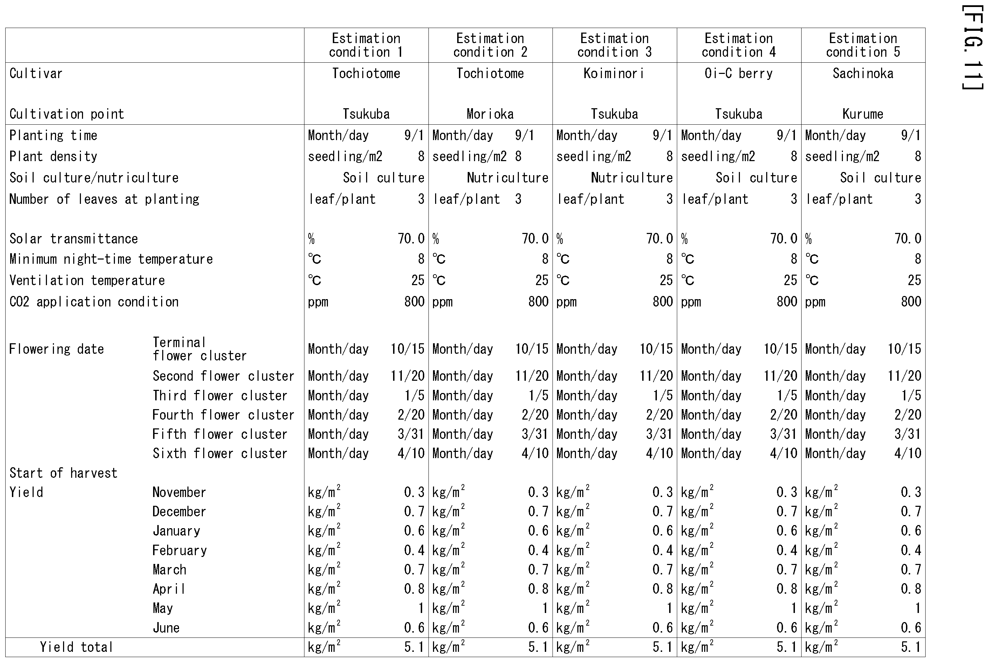

Then, in step S22, the output unit 45 generates a screen for displaying the simulation results, and transmits the screen to the user terminal 70. The screen for displaying the simulation results is, for example, a screen as illustrated in FIG. 11 to FIG. 13.

(Simulation)

The simulation performed by the simulation unit 44 will be described in detail below.

(1) Basic concept of simulation

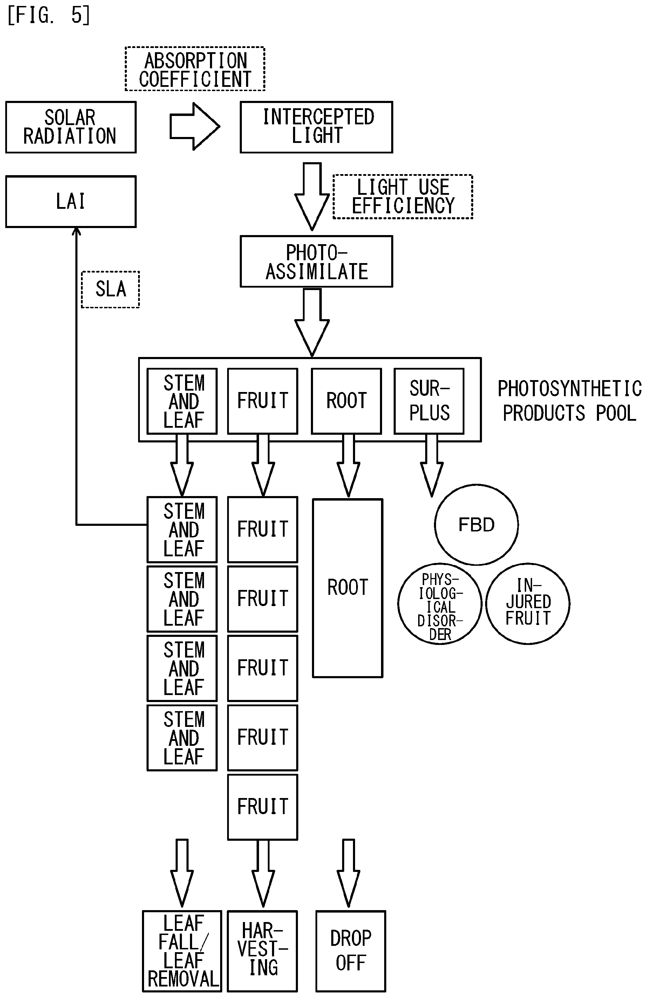

In the present embodiment, a growth model capable of describing important differences between cultivars is used. Specifically, a growth model illustrated in FIG. 5 is used, which can describe characteristics relating to photosynthesis, distribution of photosynthetic products, development and elongation of leaves, development and enlargement of flowers, nutrient absorption, morphological characteristics (leaf shape, light-receiving posture), and the like. In the present embodiment, a simulation for strawberry is described, but the simulation is designed to clarify the meaning of the parameters so that the simulation can be applied to other crops.

(a) Growth pattern

In the simulation, meteorological information (daily mean temperature and daily outside solar radiation) is given to the growth model on a daily basis, and the growth state of each of the organs (roots, leaves, crowns, and fruits) of the crop is calculated. Here, in practice, the crop is always in a growing state, and the crop size (size of roots, leaves, and crowns, the number of fruits, and the like) always changes. However, in the simulation, it is assumed that the crop size is fixed at 0:00, and the temperature and the solar radiation are received from 0:00 to 24:00 in that state. In order to reduce the error due to this assumption, the calculation interval of the simulation (the calculation interval of the present simulation is one day) may be shortened.

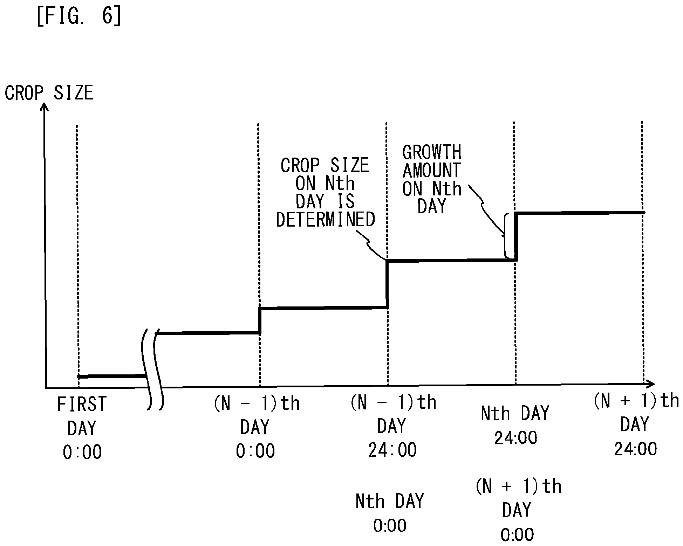

In this simulation, when calculation on the Nth day is performed, the crop size on that day is determined at 0:00 on the Nth day. That is, in this simulation, the state of the crop for receiving the temperature and the solar radiation from 0:00 to 24:00 on the Nth day (relative light intercepted rate: a value obtained from the leaf area index) and the distribution ratio (the ratio at which photosynthetic products produced on the day are distributed to the organs: the leaf, the crown, the flower cluster, and the root) are fixed. In this simulation, at 24:00 on the Nth day, the photoassimilate is calculated from the temperature, the solar radiation, and the $CO_2$ concentration on the day (Nth day), and the crop size is changed by the growth calculation of the crop from the calculated value. FIG. 6 conceptually illustrates the change in crop size in the present simulation. In the present simulation, the leaf area of each leaf at planting and the leaf area of the entire seedling at planting are calculated using the number of leaves at planting (leaf number) and the weight of the seedling at planting (fresh weight) input by the producer. Thus, the crop size at 0:00 on the first day of the calculation (crop size on the 0th day) is calculated.

(b) Relationship between photoassimilate and size

In this simulation, the photosynthetic product is called the "source" and the organ that produces the source is called the "source organ". The source organ is mainly the leave. On the other hand, the organ that stores and consumes the source is called the "sink organ". The sink organs are roots, crowns, leaves, and fruits, but the sink organ that consumes the source most is the fruit.

In this simulation, it is assumed that the growth of the crop is mainly determined by the temperature. For example, the growth process of one leaf is described as follows using the cumulative temperature. The growth stage of the leave is indicated by a relative value of the cumulative temperature, with the cumulative temperature at the time of stopping growth being 1.0 and the cumulative temperature at the time of starting growth being 0. This is defined as [Leaf Growth Index].

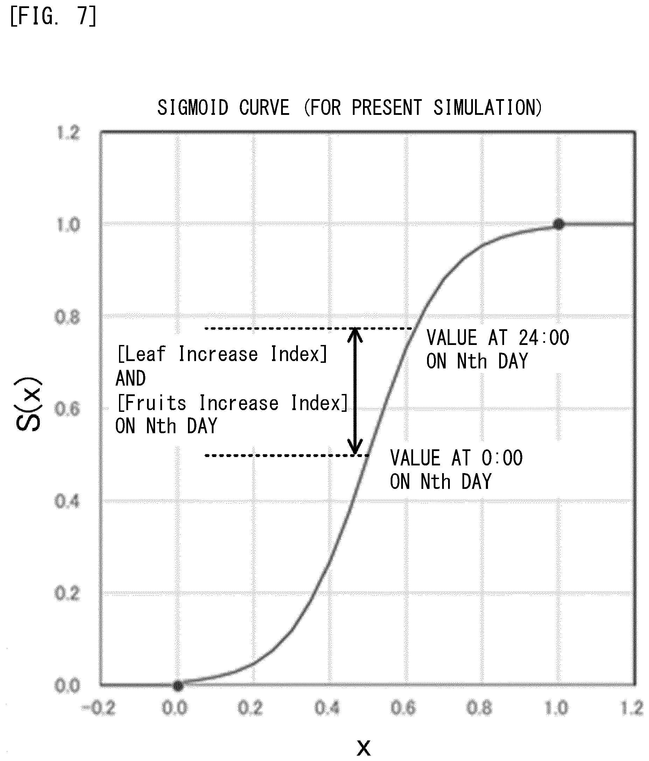

Here, the relative leaf size corresponding to [Leaf Growth Index] is defined as [Leaf Size Index] (FIG. 7). [Leaf Size Index] is defined as 1.0 for the size in the fully grown state and 0 for the size before the start of development.

In this simulation, the growth of leaves, fruits, and the like is approximated by a sigmoid curve. The relationship between [Leaf Growth Index] and [Leaf Size Index] is expressed by the equation (1) (FIG. 7). Here, x is [Leaf Growth Index], and S(x) is [Leaf Size Index].

[Equation 1]

$$S(x) = \frac{1}{1 + \exp[-a(2 * x - 1)]} \qquad (1)$$

The difference between the values of S(x) at 0:00 and 24:00 on the Nth day (see FIG. 7) is defined as [Leaf Increase Index], which is an index value of the increase in leaf growth per day. Similarly, the relative growth amount of a flower cluster [Fruits Increase Index] is defined for the flower cluster. The value of the sigmoid curve for this simulation is S(x) = 0.007 at x = 0 and S(x) = 0.993 at x = 1, and therefore the value is changed to S(x) = 0 at x = 0 or less and S(x) = 1 at x = 1 or greater.

(c) Overview of simulation model

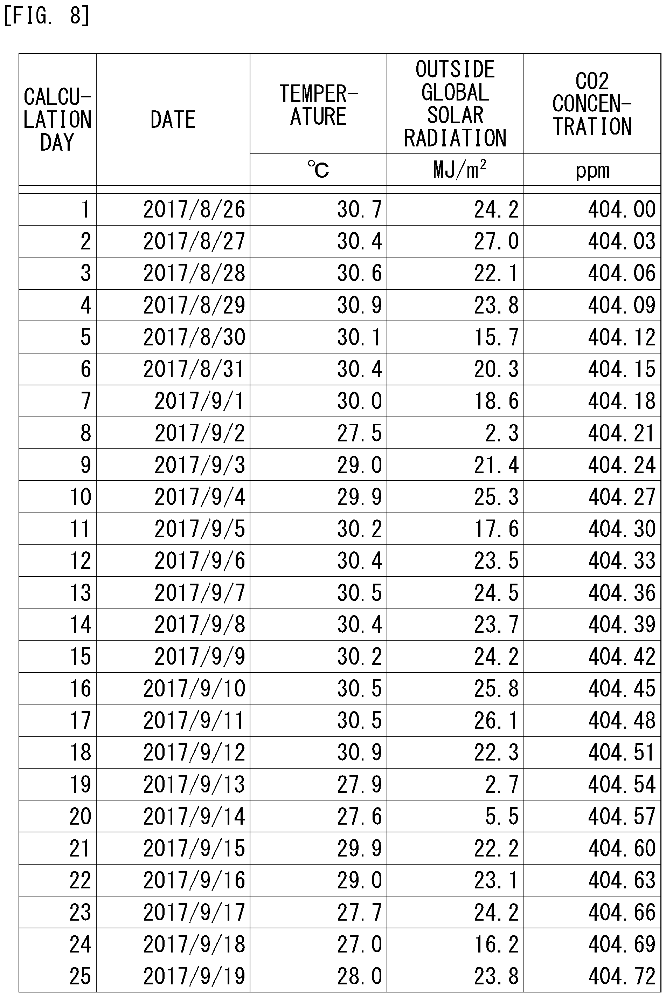

The simulation is performed based on the meteorological data and the parameters (constants). As illustrated in FIG. 8, the meteorological data used in the simulation includes a daily mean temperature (°C.), a daily outside solar radiation ($MJ/m^2$), a $CO_2$ concentration (ppm), and the like. FIG. 9 illustrates an example of parameters set by a user such as a producer. In this simulation, calculation is performed on a daily basis, and there are values calculated for each leaf, each flower cluster, and values calculated for the entire crop. The growth is calculated for each organ (leaves, crowns, fruits, roots, flower clusters) of the crop.

(2) Simulation method

(a) Overview of simulation

The simulation mainly includes processes of "calculation of photoassimilate", "calculation of crop growth", "calculation of fruit harvests", and "nutrient absorption amount". These calculations are performed on a daily basis. The variables (relative intercepted light, distribution ratio) used for calculating the photoassimilate are values at 0:00 on the calculation day (the day before the calculation day). The relative intercepted light is a variable for obtaining the intercepted light used for photosynthesis by the crop from the solar radiation. The distribution ratio is the ratio at which the sources synthesized by the crop on that day are to be distributed to each organ (roots, leaves, crowns, fruits). The photoassimilate at 24:00 on the calculation day is calculated from the distribution ratio, these values, the temperature on the day, and the solar radiation. Then, the degree of growth of the crop at 24:00 on the calculation day is calculated based on the photoassimilate. The calculation of the growth amount of the crop is divided into (a) calculation of the distribution, (b) calculation of the leaf area, (c) calculation of the bearing fruit number, (d) calculation of the fruit dry weight, and (e) calculation of the distribution ratio.

In this specification, the subscript N attached to the variable name indicates the result at 24:00 on the Nth day. In addition, the subscript M (leaf rank) is attached to a variable calculated for each leaf, and the subscript F (flower cluster rank) is attached to a variable calculated for each flower cluster. In addition, variables and constants used in the equations are indicated with []. In this simulation, the value at 0:00 on the first day of calculation is used as the "initial value".

(b) Crop growth process

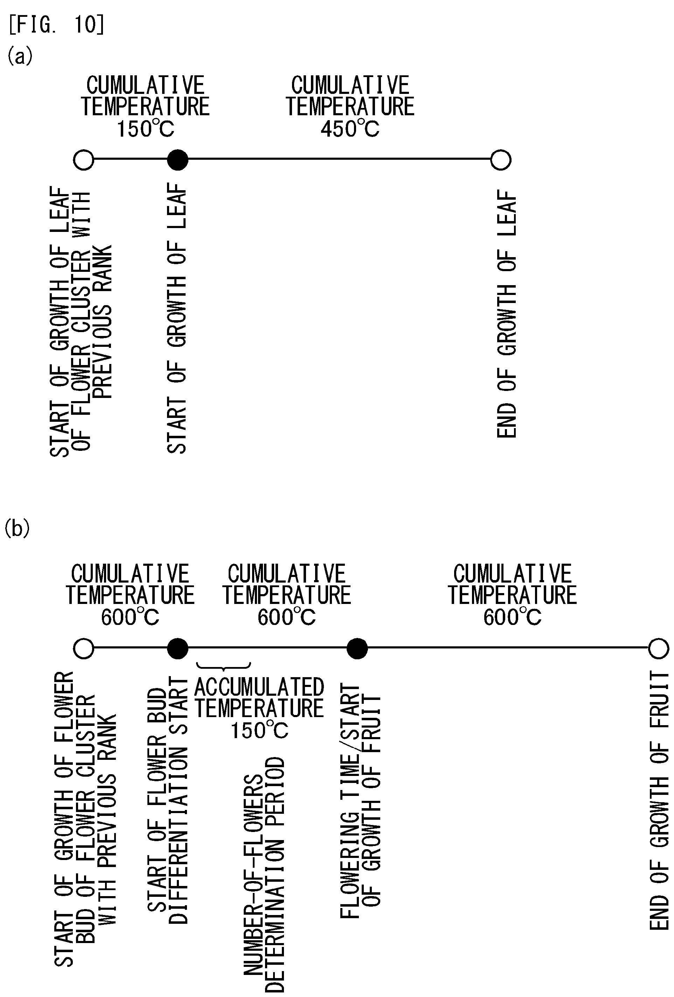

In this simulation, the growth of the crop is determined by the relationship between the previous leaf rank and the previous flower cluster rank (the order in which leaves and flower clusters are developed, the smaller rank means the earlier development) and the cumulative temperature. FIG. 10(a) and FIG. 10(b) are diagrams conceptually illustrating the growth process of leaves and flower clusters in the present simulation (the numerical values described below are fictional values assuming a fictional cultivar, and are not actual values). As illustrated in FIG. 10(a), the growth of the next leaf starts after the cumulative temperature reaches 150°C, from the time when the previous leaf starts growing as the starting point. The growth of the leave is terminated when the cumulative temperature reaches 450°C, from the start of the growth as the starting point. On the other hand, as illustrated in FIG. 10(b), the flower bud differentiation of the next flower cluster starts after the cumulative temperature reaches 600°C, from the time when the flower bud differentiation of the flower cluster with the previous rank starts as a starting point. With this flower bud differentiation as a starting point, the flowering period starts when the cumulative temperature reaches 600°C, and enlargement of the fruit constituting the flower cluster begins. Further, the growth of the flower cluster is terminated when the cumulative temperature reaches 600°C from the flowering time as a starting point. As illustrated in FIG. 10(b), the period from the start of flower bud differentiation to the time at which the cumulative temperature reaches 150°C is the number-of-flowers determination period, and the bearing fruit number is determined under the conditions during this period.

(c) Calculation of photoassimilate

The light use efficiency LUE (gDW/MJ) is a value indicating the dry matter production of the entire crop per intercepted light. This is given as a function of temperature or $CO_2$ concentration.

The solar radiation in the greenhouse [In-house Global Solar Radiation] ($MJ/m^2$) is obtained by multiplying [Outside Global Solar Radiation] (MJ/m$^2$) by [Solar Transmittance] (constant) of the greenhouse (equation (2)).

$$\begin{aligned}[\text{In-house Global Solar Radiation}]_N \\ = [\text{Solar Transmittance}] \\ \cdot [\text{Outside Global Solar Radiation}]_N\end{aligned} \quad (2)$$

[Intercepted Light] (MJ/m$^2$) used by the crop for photosynthesis is obtained by the following equation (3). The relative light intercepted rate is a value obtained from the leaf area on the previous day.

$$\begin{aligned}[\text{Intercepted Light}]_N \\ = [\text{Relative Intercepted Light}]_{(N-1)} \\ \cdot [\text{In-house Global Solar Radiation}]_N\end{aligned} \quad (3)$$

Further, [Dry Matter Production] (gDW/m$^2$), which is the photoassimilate of the entire crop per unit area, is obtained by the following equation (4).

$$[\text{Dry Matter Production}]_N = [\text{Intercepted Light}]_N \cdot [\text{LUE}]_N \quad (4)$$

[Photoassimilate] (gDW/plant), which is the photoassimilate per plant of the crop, is obtained by the following equation (5) using [Planting Density] (plant/m$^2$), which is the number of plants of the crop per unit area constant.

$$[\text{Photoassimilate}]_N = [\text{Dry Matter Production}]_N/[\text{Planting Density}] \quad (5)$$

In the calculation of leaf area performed later, [SLA] (m$^2$/gDW), which is the specific leaf area per dry weight of the leaf, is used. [SLA]$_N$ is expressed as a function of temperature.

(3) Calculation of crop growth

(a) Calculation of Distribution

In the calculation of distribution, the distribution of the produced photoassimilate to each organ is obtained. The distribution is calculated as a value for the entire crop and is basically obtained from the photoassimilate and the distribution ratio, but adjustment is performed by setting [Potential Growth of Flower Cluster] (gDW/plant) as the maximum value of the source that can be received by the flower cluster (maximum value of the distribution). [Potential Growth of Flower Cluster] can be obtained by the following equation (6). In the equation (6), [Flower Cluster Growth Coefficient] (gDW/(plant·°C)) is a coefficient indicating the maximum value of source that one flower cluster can receive for a temperature of 1°C, and [Total Fruits Increase Index] is the total value of the relative growth amounts of all flower clusters.

$$\begin{aligned}[\text{Potential Growth of Flower Cluster}]_N \\ = [\text{Flower Cluster Growth Amount Coefficient}] \\ \cdot [\text{Temperature}]_N \cdot [\text{Total Fruits Increase Index}]_{N-1}\end{aligned} \quad (6)$$

The distribution is calculated in three steps. Therefore, the variables of the first two stages are denoted by (1) and (2) to distinguish them from the final result. The units for the photoassimilate and the distribution are (gDW/plant). [Distribution to Leaf (1)], [Distribution to Crown (1)], [Distribution to Flower Cluster (1)], and [Distribution to Root (1)] (gDW/plant) are obtained by the following equations (7A) to (7D), assuming that the photoassimilate from 0:00 to 24:00 on the day is allocated to each of the organs according to the distribution ratio on the previous day (0:00 on the day).

$$\begin{aligned}[\text{Distribution to Leaf (1)}]_N \\ = [\text{Leaf Distribution Ratio}]_N \cdot [\text{Photoassimilate}]_N\end{aligned} \quad (7A)$$

$$[\text{Distribution to Crown (1)}]_N$$
$$= [\text{Crown Distribution Ratio}]_{N-1} \cdot [\text{Photoassimilate}]_N \quad (7B)$$

$$[\text{Distribution to Flower Cluster (1)}]_N$$
$$= [\text{Flower Cluster Distribution Ratio}]_{N-1} \quad (7C)$$
$$\cdot [\text{Photoassimilate}]_N$$

$$[\text{Distribution to Root (1)}]_N$$
$$= [\text{Root Distribution Ratio}]_{N-1} \cdot [\text{Photoassimilate}]_N \quad (7D)$$

Further, [Distribution to Leaf (2)], [Distribution to Crown (2)], and [Distribution to Root (2)] (gDW/plant) are corrected as follows so that the distribution to flower cluster does not exceed the potential growth of flower cluster.

$$[\text{Distribution to Leaf (2)}]_N = [\text{Distribution to Leaf (1)}]_N \quad (7A)'$$

$$[\text{Distribution to Crown (2)}]_N = [\text{Distribution to Crown (1)}]_N \quad (7B)'$$

$$[\text{Distribution to Root (2)}]_N = [\text{Distribution to Root (1)}]_N \quad (7D)'$$

For [Distribution to Flower Cluster (2)], if [Distribution to Flower Cluster (1)]$_N$ < [Potential Growth of Flower Cluster]$_N$,

$$[\text{Distribution to Flower Cluster (2)}]_N$$
$$= [\text{Distribution to Flower Cluster (1)}]_N \quad (7C1)'$$

and otherwise,

$$[\text{Distribution to Flower Cluster (2)}]_N$$
$$= [\text{Potential Growth of Flower Cluster}]_N. \quad (7C2)'$$

Here, [Surplus Dry Matter] (gDW/plant), which is the photoassimilate that has not been distributed to the flower cluster because the potential growth of flower cluster has been exceeded, is expressed by the following equation (8).

$$[\text{Surplus Dry Matter}]_N$$
$$= ([\text{Distribution to Leaf (1)}]_N$$
$$+ [\text{Distribution to Crown (1)}]_N$$
$$+ [\text{Distribution to Flower Cluster (1)}]_N$$
$$+ [\text{Distribution to Root (1)}]_N) \quad (8)$$
$$- ([\text{Distribution to Leaf (2)}]_N$$
$$+ [\text{Distribution to Crown (2)}]_N$$
$$+ [\text{Distribution to Flower Cluster (2)}]_N$$
$$+ [\text{Distribution to Root (2)}]_N)$$

The surplus dry matter is redistributed to other than the flower cluster, and the respective distributions are obtained by the following equations (9A) to (9D).

$$[\text{Distribution to Leaf}]_N = [\text{Distribution to Leaf (2)}]_N + [\text{Leaf Surplus Distribution Ratio}] \cdot [\text{Surplus Dry Matter}]_N \quad (9A)$$

$$[\text{Distribution to Crown}]_N = [\text{Distribution to Crown (2)}]_N + [\text{Crown Surplus Distribution Ratio}] \cdot [\text{Surplus Dry Matter}]_N \quad (9B)$$

$$[\text{Distribution to Flower Cluster}]_N = [\text{Distribution to Flower Cluster (2)}]_N \quad (9C)$$

$$[\text{Distribution to Root}]_N = [\text{Distribution to Root (2)}]_N + [\text{Root Surplus Distribution Ratio}] \cdot [\text{Surplus Dry Matter}]_N \quad (9D)$$

(b) Leaf area calculation

In the leaf area calculation, the areas and the dry weights (DW) of the leaf and the crown are calculated for each leaf. First, [Leaf Growth Index] (dimensionless) indicating the growth stage of the leaf as a relative value of cumulative temperature is obtained by the following equation (10A). M represents the leaf rank.

$$[\text{Leaf Growth Index}]_{M,N} = \{[\text{Cumulative Temperature}]_N - (M - 1) \cdot 150\}/450 \quad (10A)$$

[Leaf Size Index] (dimensionless), which is the size index of the leaf, is calculated by the following equation (10B). The initial value of [Leaf Size Index] is set to zero.
[Equation 2]

$$[\text{Leaf Size Index}]_{M,N} = \frac{1}{1 + exp\left[-a\big(2 * [\text{Leaf Growth Index}]_{M,N} - 1\big)\right]} \quad (10B)$$

Further, [Leaf Increase Index] (dimensionless), which is a leaf growth amount index, is obtained by the following equation (11) from a change in leaf size index from 24:00 on the previous day (0:00 on the current day) to 24:00 on the current day.

$$[\text{Leaf Increase Index}]_{M,N} = [\text{Leaf Size Index}]_{M,N} - [\text{Leaf Size Index}]_{M,N-1} \quad (11)$$

Further, the total of [Leaf Increase Index] of all leaves is defined as [Total Leaf Increase Index], and [Total Leaf Increase Index] is obtained from the following equation (12). NL represents the number of leaves.
[Equation 3]

$$[\text{Total Leaf Increase Index}]_N = \sum_{M=1}^{NL} [\text{Leaf Increase Index}]_{M,N} \quad (12)$$

These values are then used to calculate the dry weight of the leaves, [Leaf DW] (gDW/plant), as follows.

$$[\text{Leaf DW}]_{M,N} = [\text{Leaf DW}]_{M,N-1} + [\text{Leaf }\Delta\text{DW}]_{M,N} \qquad (13A)$$

$[\text{Leaf }\Delta\text{DW}]_{M,N}$ is expressed by the following equation (13B).

$$[\text{Leaf }\Delta\text{DW}]_{M,N} = [\text{Distribution to Leaf}]_{M,N} \qquad (13B)$$

$$\cdot[\text{Leaf Increase Index}]_{M,N}/[\text{Total Leaf Increase Index}]_N$$

The initial value of [Leaf DW] (i.e., the value of $[\text{Leaf DW}]_{M,N}$ at 0:00 on the first day of calculation ($[\text{Leaf DW}]_{M,1}$)) is calculated and set as follows.

First, $[\text{Leaf Growth Index}]_{M,1}$, which indicates the leaf growth stage at 0:00 on the first day of calculation as a relative value of the cumulative temperature, is calculated from the following equation (13C). M represents the leaf rank.

$$[\text{Leaf Growth Index}]_{M,1} = 150 \times \{INL - (M - 1)\}/450 \qquad (13C)$$

Here, INL means the number of leaves at planting (the first day of calculation), and is a value input by the producer.

For example, when there are five leaves at planting, $[\text{Leaf Growth Index}]_{2,1}$ of the leaf with the rank 2 is $150 \times \{5 - (2 - 1)\}/450 \approx 1.3$ from the above equation (13C). Further, when there are five leaves at planting, $[\text{Leaf Growth Index}]_{3,1}$ of the leaf with the rank 3 is $150 \times \{5 - (3 - 1)\}/450 = 1$ from the above equation (13C).

The initial value of [Leaf DW] ($[\text{Leaf DW}]_{M,1}$) is obtained from the following equations (13D) and (13E).

$$[IW'] = [IW] \times \alpha \qquad (13D)$$

$$[\text{Leaf DW}]_{M,1} = [IW'] \times \beta \times ([\text{Leaf Growth Index}]_{M,1} /[\text{Total Leaf Growth Index}]_{M,1}) \qquad (13E)$$

Here, [IW] in the above equation (13D) means the weight of the seedling (fresh weight (gFW)) at planting (the first day of calculation), and is a value input by the producer. Further, $\alpha$ is a coefficient for converting the weight of the seedling (fresh weight (gFW)) input by the producer into the dry weight (gDW). In the above equation (13E), $\beta$ is a coefficient indicating the ratio of the leaf weight to the seedling weight, and is a value determined in advance for each cultivar. Further, $[\text{Total Leaf Growth Index}]_{M,1}$ is the total of [Leaf Growth Index] of all the leaves (five leaves), and is 5.

For example, it is assumed that [IW] is 15.0 gFW, $\alpha$ is 0.2, and $\beta$ is 0.9. In this case, $[\text{Leaf DW}]_{3,1}$ of the leaf with the rank 2 when there were five leaves at planting described above is

$$[IW'] = 15.0 \times 0.2 = 3.0,$$

$$[\text{Leaf DW}]_{3,1} = 3.0 \times 0.9 \times (1.3/5) \approx 0.7.$$

When there were five leaves at planting, $[\text{Leaf DW}]_{3,1}$ of the leaf with the rank 3 is

$$[\text{Leaf DW}]_{3,1} = 3.0 \times 0.9 \times (1/5) \approx 0.54.$$

Further, regarding the crown, the crown is considered to increase at a constant rate at the same time as the leaf increases by one, and [Stem DW] (gDW/plant), which is the dry weight, is obtained as follows, similarly to [Leaf DW].

$$[\text{Stem DW}]_{M,N} = [\text{Stem DW}]_{M,N-1} + [\text{Stem }\Delta\text{DW}]_{M,N} \qquad (14A)$$

[Stem $\Delta$DW]$_{M,N}$ is expressed by the following equation (14B).

$$[\text{Stem } \Delta\text{DW}]_{M,N} = [\text{Distribution to Crown}]_{M,N}$$

(14B)

$$\cdot[\text{Leaf Increase Index}]_{M,N}/[\text{Total Leaf Increase Index}]_N$$

The initial value of [Stem DW] (i.e., the value [Stem DW]$_{M,1}$ of [Stem DW]$_{M,N}$ at 0:00 on the first day of calculation is calculated from the following equation (14C).

$$[\text{Stem DW}]_{M,1} = [\text{IW}'] \times (1 - \beta)$$

(14C)

In the above equation (14C), [IW'] and $\beta$ are the same values as in the above equation (13E). That is, [IW'] means the dry weight of the seedling at planting (the first day of calculation), and is a value obtained by converting the value (fresh weight) input by the producer into the dry weight. Further, $\beta$ is a coefficient indicating a ratio of the weight of the leave to the weight of the seedling, and is a value determined in advance for each cultivar.

The leaf area [Leaf Area] ($m^2$/plant) is obtained by the following equation (15A) using the specific leaf area [SLA] ($m^2$/gDW).

$$[\text{Leaf Area}]_{M,N} = [\text{Leaf Area}]_{M,N-1} + [\text{SLA}]_N$$
$$\cdot [\text{Distribution to Leaf}]_{M,N}$$
$$\cdot [\text{Leaf Increase Index}]_{M,N}/[\text{Total Leaf Increase Index}]_N$$

(15A)

The initial value of [Leaf Area] (i.e., the value ([Leaf Area]$_{M,N}$) of [Leaf Area]$_{M,N}$ at 0:00 on the first day of calculation ([Leaf Area]$_{M,1}$)) is calculated from the following equation (15B).

$$[\text{Leaf Area}]_{M,1} = [\text{Leaf DW}]_{M,1} \times [\text{SLA}]_1$$

(15B)

In the above equation (15B), [SLA]$_1$ is the specific leaf area on the first day.

Further, when the total of the areas [Leaf Area] of the leaves attached to the crop is represented by [Total Leaf Area (1)] ($m^2$/plant), [Total Leaf Area (1)] is obtained from the following equation (16).

[Equation 4]

$$[\text{Total Leaf Area (1)}]_N = \sum_{M=1}^{NL} [\text{Leaf Area}]_{M,N}$$

(16)

Further, leaf parameters used for calculating the photoassimilate are calculated.

First, the leaf area index [LAI] (dimensionless), which is the leaf area per unit land area, is obtained from the following equation (17) using [Plant Density] (plants/$m^2$), which is the number of crop plants per land area.

$$[\text{LAI}]_N = [\text{Total Leaf Area}]_N \cdot [\text{Plant Density}]$$

(17)

Further, [Relative Intercepted Light] (dimensionless) representing the ratio of the solar radiation received by the crop to the solar radiation per land area is obtained from the following equation (18) using [K] (dimensionless), which is an absorption coefficient, and the leaf area index on the previous day. The absorption coefficient is a coefficient representing the ease with which light reaches the inside of the community.

$$[\text{Relative Intercepted Light}]_N = 1 - \exp(-[\text{K}] \cdot [\text{LAI}]_N)$$

(18)

(c) Calculation of bearing fruit number

[0083]  The bearing fruit number is obtained for each flower cluster from the photoassimilate (periodic dry matter production) during a specific period (number-of-flowers determination period) starting from the day after the start of flower bud differentiation of the crop and the relational expression between the periodic dry matter production and the bearing fruit number. The flower bud differentiation occurs in the order of the flower cluster rank, and the flower cluster with the next rank is not differentiated unless a certain amount of temperature is accumulated after the flower cluster with the one less rank (flower cluster with the previous rank) is differentiated.

[Differentiation Start Index] indicating that differentiation has started is determined by [Differentiation Condition Determination A] (°C) and [Differentiation Condition Determination B] described below. Here, [Cumulative Temperature during Flower Bud Differentiation Period] (°C) is the cumulative temperature on the day when [Differentiation Start Index] first becomes 1, and is -1.0 before that.

In this simulation, based on the value of [Cumulative Temperature during Flower Bud Differentiation Period], [Differentiation Condition Determination A], which is an index for determining whether the cumulative temperature from the day after the start of flower bud differentiation of the flower cluster with the previous rank exceeds a certain value (for example, 600°C), is obtained as follows. The value of 600°C is set because four leaves are usually developed between the flower clusters of the present cultivar and the cumulative temperature required for the development of one leaf is set as 150°C. F in the equation represents the rank of the flower cluster.

When $[\text{Differentiation Start Index}]_{F-1, N} = 1$,

$$\begin{aligned}&[\text{Differentiation Condition Determination A}]_{F, N}\\&\quad = [\text{Cumulative Temperature}]_N - ([\text{Cumulative Temperature during}}\\&\quad \text{Flower Bud Differentiation Period}]_{F-1, N} + 600). \end{aligned} \quad (19A)$$

In other cases,

$$[\text{Differentiation Condition Determination A}]_{F,N} = -1.0. \quad (19B)$$

Further, [Differentiation Condition Determination B] (gDW/plant), which is a determination index of whether the photoassimilate is in a condition that allows flower bud differentiation, is obtained from the following equation (20).

$$\begin{aligned}&[\text{Differentiation Condition Determination B}]_N\\&\quad = (\text{Average of }[\text{Photoassimilate}]\text{for the }(N\\&\quad - 6)\text{th day to the Nth day}) \end{aligned} \quad (20)$$

[Differentiation Start Index] indicating the start of flower bud differentiation is set to 1 once it has been set to 1 thereafter.
That is, if $[\text{Differntiation Start Index}]_{F,N-1} = 1$,

$$[\text{Differentiation Start Index}]_{F,N} = 1. \quad (21A)$$

If $0.0 \le [\text{Differentiation Condition Determination A}]_{F, N}$ and $1.0 <$

$[\text{Differentiation Condition Determination B}]_N$,

$$[\text{Differentiation Start Index}]_{F, N} = 1. \quad (21B)$$

In other cases,

$$[\text{Differentiation Start Index}]_{F, N} = 0. \quad (21C)$$

[Cumulative Temperature during Flower Bud Differentiation Period] in the above equation (19A) is the cumulative temperature on the day when the value of [Differentiation Start Index] on the previous day is 0 and the value on the current day is 1. The initial value of [Cumulative Temperature during Flower Bud Differentiation Period] is set to -1.0, and once [Cumulative Temperature during Flower Bud Differentiation Period] is set, the same value is used. The initial value is set to a negative value in order to classify [Cumulative Temperature during Flower Bud Differentiation Period] after the start of the flower bud differentiation period as a positive value and before that as a negative value. This classification by positive and negative values is similarly performed for the cumulative temperature during the flowering period.

That is, if [Differentiation Start Index]$_{F, N-1}$ = 0 and [Differentiation Start Index]$_{F, N}$ = 1,

$$[\text{Cumulative Temperature during Flower Bud Differentiation Period}]_{F, N} = [\text{Cumulative Temperature}]_N. \tag{22A}$$

In other cases,

$$[\text{Cumulative Temperature during Flower Bud Differentiation Period}]_{F, N} = [\text{Cumulative Temperature during Flower Bud Differentiation Period}]_{F, N-1}. \tag{22B}$$

Further, in this simulation, a period in which the cumulative temperature after the start of flower bud differentiation is in a range of 0 to 150°C is defined as a number-of-flowers determination period, and [Number-of-Flowers Determination Period Index (1) (dimensionless) serving as an index indicating whether the period is the number-of-flowers determination period is obtained as follows. The number-of-flowers determination period is defined as a period in which one leaf is developed, and the cumulative temperature during the number-of-flowers determination period is set to 150°C on the assumption that the cumulative temperature per leaf is 150°C.

That is if [Differentiation Start Index]$_{F, N}$ = 0,

$$[\text{Number-of-Flowers Determination Period Index (1)}]_{F,N} = -1.0. \tag{23A}$$

In other cases,

$$[\text{Number of Flowers Determination Period Index (1)}]_{F, N} = ([\text{Cumulative Temperature}]_N - [\text{ Cumulative Temperature during Flower Bud Differentiation Period}]_{F, N})/150. \tag{23B}$$

[Number-of-Flowers Determination Period Index] (dimensionless) is obtained as follows so as to be 1 when the cumulative temperature from the start of flower bud differentiation is in a range of 0 to 150°C.

If 0.0 ≤ [Number-of-Flowers Determination Period Index(1)]$_{F, N}$ ≤ 1.0,

$$[\text{Number-of-Flowers Determination Period Index}]_{F, N} = 1. \tag{24A}$$

In other cases,

$$[\text{Number-of-Flowers Determination Period Index}]_{F, N} = 0. \tag{24B}$$

[Photoassimilate during Determination Period] (gDW/plant), which is the integrated value of the photoassimilate during the number-of-flowers determination period, is expressed by the following equation (25).

$$[\text{Photoassimilate during Determination Period}]_{F, N} = [\text{Photoassimilate during Determination Period}]_{F, N-1} + [\text{Number-of-Flowers Determination Period Index}]_{F, N} \cdot [\text{Photoassimilate}]_{F, N} \tag{25}$$

Then, [Bearing Fruit Number (1)] (fruits/plant) can be obtained as in the following equation (26) by using [Photoassimilate during Determination Period] of the above equation (25), [Bearing Fruit Number per Dry Matter Production during Determination Period] (m$^2$·fruits/gDW·plant), and the [Plant Density] (plant/m$^2$) of the above formula (25).

$$[\text{Bearing Fruit Number (1)}]_{F, N} = [\text{Photoassimilate during Determination Period}]_{M, N} \cdot [\text{Bearing Fruit Number per Dry Matter Production during Determination Period}] \cdot [\text{Plant Density}] \quad (26)$$

[Bearing Fruit Number] (fruits/plant) is corrected to be in a range of 1.0 to 10.0 as follows.

That is, if [Bearing Fruit Number (1)]$_{F, N}$ <1.0,

$$[\text{Bearing Fruit Number}]_{F, N} = 1.0. \quad (27A)$$

If 1.0 ≤ [Bearing Fruit Number (1)]$_{F, N}$ ≤ 10.0,

$$[\text{Bearing Fruit Number}]_{F, N} = [\text{Bearing Fruit Number (1)}]_{F, N}. \quad (27B)$$

In other cases,

$$[\text{Bearing Fruit Number}]_{F, N} = 10.0. \quad (27C)$$

The flowering time is defined as the time when the cumulative temperature from the flower bud differentiation reaches 600°C, and the cumulative temperature at that time is defined as [Cumulative Temperature at Flowering Time] (°C). The value of 600°C is set on the assumption that after the flower bud differentiate, flowering occurs with four leaves and requires an cumulative temperature of 150°C per leaf. The cumulative temperature at flowering time is effective only after the cumulative temperature during the flower bud differentiation period is determined, and the initial value is set to -1.0. Once the cumulative temperature at flowering time is set, the cumulative temperature at flowering time remains the same.

That is, if [Cumulative Temperature during Flower Bud Differentiation Period]$_{F, N}$ < 0,

$$[\text{Cumulative Temperature at Flowering Time}]_{F, N} = -1.0. \quad (28A)$$

In other cases,

$$[\text{Cumulative Temperature at Flowering Time}]_{F, N} = [\text{Cumulative Temperature during Flower Bud Differentiation Period}]_{F, N} + 600. \quad (28B)$$

(d) Calculation of flower-cluster dry weight

The relative growth stage of the flower cluster, [Fruits Growth Index] (dimensionless), is obtained as follows. When the cumulative temperature at flowering time is invalid (less than 0), the value of Fruits Growth Index is set to - 1.0. The initial value of Fruits Growth Index is also set to -1.0.

That is, if [Cumulative Temperature at Flowering Time]$_{F, N}$ < 0,

$$[\text{Fruits Growth Index}]_{F, N} = -1.0. \quad (29A)$$

In other cases,

$$[\text{Fruits Growth Index}]_{F, N} = ([\text{Cumulative Temperature}]_{N} - [\text{Cumulative Temperature at Flowering Time}]_{F, N})/600. \quad (29B)$$

Further, [Fruits Size Index] (dimensionless) is calculated by the following equation (30). The initial value of Fruits Size Index is set to zero.

[Equation 5]

$$[\text{Fruits Size Index}]_{F,N}$$
$$= \frac{1}{1 + exp\ [-a(2 * [\text{Fruits Growth Index}]_{F,N} - 1)]} \tag{30}$$

In addition, [Fruits Increase Index (1)] (dimensionless) is obtained as a relative growth increase of the flower cluster from the relative change rate of the flower cluster from 24:00 on the previous day (0:00 on the day) to 24:00 on the day by the following equation (31).

$$[\text{Fruits Increase Index (1)}]_{F,\ N}$$
$$= [\text{Fruits Size Index}]_{F,\ N} - [\text{Fruits Size Index}]_{F,\ N-1} \tag{31}$$

However, since it is assumed that 10 fruits are beared for the flower cluster, the correction is performed as in the following equation (32), and [Fruits Increase Index] (dimensionless) is obtained.

$$[\text{Fruits Increase Index}]_{F,\ N}$$
$$= ([\text{Fruits Increase Index (1)}]_{F,\ N} \cdot [\text{Bearing Fruit Number}]_{F,\ N})/10 \tag{32}$$

The total of [Fruits Increase Index] of all flower clusters is defined as [Total Fruits Increase Index] (dimensionless) (see the following equation (33)). NF represents the number of flower clusters.

[Equation 6]

$$[\text{Total Fruits Increase Index}]_N = \sum_{F=1}^{NF} [\text{Fruits Increase Index}]_{F,N} \tag{33}$$

In this simulation, [Fruits DW] (gDW/plant), which is the dry weight of the flower cluster, is obtained using these values. Basically, [Fruits DW] does not increase after [Fruits Growth Index] becomes greater than 1. The initial value of [Fruits DW] is set to zero.

$$[\text{Fruits DW}]_{F,\ N} = [\text{Fruits DW}]_{F,\ N-1} + [\text{Fruits }\Delta DW]_{F,\ N} \tag{34A}$$

[Fruits $\Delta DW]_{F,\ N}$ is expressed by the following equation (34B).

$$[\text{Fruits }\Delta DW]_{F,N}$$
$$= [\text{Distribution to Flower Cluster}]_N$$
$$\cdot [\text{Fruits Increase Index}]_{F,N} \tag{34B}$$
$$/[\text{Total Fruits Increase Index}]_N$$

(e) Distribution ratio calculation

[Distribution Ratio] (dimensionless) of the crop is calculated as a value for the entire crop based on the crop growth. The distribution ratio is obtained from [Flower-Cluster Sink Strength] (dimensionless), which is the ease of receiving the source in the flower cluster, and [Total Sink Strength], which is the total of sink strengths of all organs.

Weighting of [Total Fruits Increase Index], [Total Leaf Increase Index], and [Total Stem Increase Index] is performed based on experimental data at the time of disassembly investigation or the like. [Fruit Distribution Adjustment Coefficient], [Leaf Distribution Adjustment Coefficient], and [Crown Distribution Adjustment Coefficient] are represented by [$\alpha$], [$\beta$], and [$\gamma$], respectively. From these, the flower-cluster sink strength, the leaf sink strength, the crown sink strength, and the total sink strength are obtained from the following equations.

$$[\text{Flower-Cluster Sink Strength}]_N = [\text{Total Fruits Increase Index}]_N \cdot [\alpha] \tag{35A}$$

$$[\text{Leaf Sink Strength}]_N = [\text{Total Leaf Increase Index}]_N \cdot [\beta] \tag{35B}$$

$$[\text{Crown Sink Strength}]_N = [\text{Total Stem Increase Index}]_N \cdot [\gamma] \qquad (35C)$$

$$[\text{Total Sink Strength}]_N = [\text{Flower Cluster Sink Strength}]_N + [\text{Leaf Sink Strength}]_N + [\text{Crown Sink Strength}]_N + [\text{Root Sink Strength}] \qquad (35D)$$

[Flower-Cluster Distribution Ratio], [Root Distribution Ratio], [Leaf Distribution Ratio], and [Crown Distribution Ratio] (dimensionless) are obtained from the following equations (36A) to (36D).

$$\begin{aligned}[\text{Flower-Cluster Distribution Ratio}]_N &= [\text{Flower-Cluster Sink Strength}]_N \\ &/[\text{Total Sink Strength}]_N\end{aligned} \qquad (36A)$$

$$[\text{Root Distribution Ratio}]_N = 0.05 \qquad (36B)$$

$$\begin{aligned}[\text{Leaf Distribution Ratio}]_N &= [\text{Leaf Sink Strength}]_N/[\text{Total Sink Strength}]_N\end{aligned} \qquad (36C)$$

$$\begin{aligned}[\text{Crown Distribution Ratio}]_N &= [\text{Crown Sink Strength}]_N/[\text{Total Sink Strength}]_N\end{aligned} \qquad (36D)$$

(4) Calculation of fruit harvests

In this simulation, it is assumed that the target crop is not harvested in a single day in a flower cluster, but is gradually harvested. [Harvest Start Index] (dimensionless) indicating that harvest is possible is set to 1 on the next day or later after [Fruits Increase Index] first becomes 1.0 or greater, and is set to zero before that. The date when [Harvest Start Index] first becomes 1 is set as the harvest start date. [Harvest Start Index] is expressed as follows, and the initial value is zero.

$$\text{That is, if } [\text{Harvest Start Index}]_{F, N-1} = 1,$$
$$[\text{Harvest Start Index}]_{F, N} = 1. \qquad (37A)$$

$$\text{If } [\text{Fruits Source Index}]_{F, N-1} \geq 1.0,$$
$$[\text{Harvest Start Index}]_{F, N} = 1. \qquad (37B)$$

In other cases,

$$[\text{Harvest Start Index}]_{F, N} = 0. \qquad (37C)$$

Here, the total harvest per flower cluster of the fruit is [Fruits DW] (gDW/plant) on the harvest start date. Basically, [Fruits DW] does not increase after [Fruits Growth Index] becomes larger than 1, and therefore, remains the same after the harvest start date. One fruit is harvested over a period of time until the cumulative temperature reaches 60°C, and [Harvested Fruit DW per Temperature] (gDW/plant·°C), which is the dry weight of the harvested fruit per 1°C of temperature, is calculated as follows. The initial value of [Harvested Fruit DW per Temperature] is -1.0, and once an effective value is set, the same value is used.
That is, if [Harvested Fruit DW per Temperature]$_{F, N-1} \geq 0.0$,

$$\begin{aligned}[\text{Harvested Fruit DW per Temperature}]_{F,N} &= [\text{Harvested Fruit DW per Temperature}]_{F,N-1}.\end{aligned} \qquad (38A)$$

If [Harvest Start Index]$_{F, N} = 1$ and [Bearing Fruit Number]$_{F, N-1} > 0.0$,

$$[\text{Harvested Fruit DW per Temperature}]_{F,N}$$
$$= [\text{Fruits DW}]_{F,N} - \frac{1}{[\text{Bearing Fruit Number}]_{F,N-1} \cdot 60}. \qquad (38B)$$

In other cases,

$$[\text{Harvested Fruit DW per Temperature}]_{F,N} = -1.0. \qquad (38C)$$

Then, the dry weight of the harvestable fruit before the harvesting operation on the calculation day is represented by [Fruits unHarvest] (gDW/plant), and [Fruits unHarvest] is obtained as follows. Note that [Fruits unHarvest] is given [Fruits DW] of the previous day on the harvesting start date, and is decreased by the harvested amount. The initial value of [Fruits unHarvest] is -1.0, and the values before and after the harvest period are also -1.0.

That is, if $[\text{Fruits unHarvest}]_{F,\ N-1} \geq 0.0$, then

$$[\text{Fruits unHarvest}]_{F,N}$$
$$= [\text{Fruits unHarvest}]_{F,N-1} - [\text{Fruits HARVEST}]_{F,N-1}. \qquad (39A)$$

If $[\text{Harvest Start Index}]_{F,\ N-1} = 0$ and $[\text{Harvest Start Index}]_{F,\ N} = 1$,

$$[\text{Fruits unHarvest}]_{F,\ N} = [\text{Fruits DW}]_{F,\ N-1}. \qquad (39B)$$

In other cases,

$$[\text{Fruits unHarvest}]_{F,N} = -1.0. \qquad (39C)$$

After the harvest period has started, and when there are harvestable fruits, the dry weight of the harvested fruit, [Fruits HARVEST] (gDW/plant), is calculated as follows.

That is, when $[\text{Harvest Start Index}]_{F,\ N} = 1$ and $[\text{Fruits unHarvest}]_{F,\ N} > 0.0$,

$$[\text{Fruits HARVEST}]_{F,\ N}$$
$$= \min([\text{Harvested Fruit DW per Temperature}]_F \cdot [\text{Temperature}]_N, \qquad (40A)$$
$$[\text{Fruits unHarvest}]_{F,\ N})$$

In other cases,

$$[\text{Fruits HARVEST}]_{F,\ N} = 0.0. \qquad (40B)$$

Further, when the total of [Fruits HARVEST] of all flower clusters is represented by [Fruit Harvested Dry Weight] (gDW/plant), [Fruit Harvested Dry Weight] can be expressed by the following equation (41).

[Equation 7]

$$[\text{Fruits Harvested Dry Weight}]_N = \sum_{F=1}^{NF} [\text{Fruits Harvest}]_{F,N} \qquad (41)$$

By dividing this [Fruit Harvested Dry Weight] by [Fruit Dry Matter Content] (g/gDW), [Fruit Harvested Fresh Weight] (g/plant) is obtained as in the following equation (42).

$$[\text{Fruit Harvested Fresh Weight}]_N = [\text{Fruit Harvested Dry Weight}]_N / [\text{Fruit Dry Matter Content}] \qquad (42)$$

Then, by multiplying [Fruit Harvested Fresh Weight] by the [Number of Field Plants] (plant), [Field Fruit Harvested Fresh Weight] (kg), which is the yield of the entire field, is obtained as in the following equation (43).

$$[\text{Field Fruit Harvested Fresh Weight}]_N = 0.001 \cdot [\text{Fruit Harvested Fresh Weight}]_N \cdot [\text{Number of Field Plants}] \tag{43}$$

The simulation unit 44 creates the growth model as described above using the environmental data and the parameters, and executes the simulation regarding the growth for each combination of the cultivar, the cultivation location, and the cultivation information selected by the producer using the created growth model. Then, the simulation result (value obtained by the simulation) of each combination is transmitted to the output unit 45. The simulation unit 44 can also perform on simulations fruits and vegetables other than strawberries, such as tomatoes, strawberries, cucumbers, and paprika, by using parameters corresponding to items and cultivars.

(5) Nutrient absorption amount calculation

Nutrient absorption amount is determined by multiplying the increase in dry matter of leaves, crowns, fruits, and roots by the nutrient content. Here, N (nitrogen) is described as an example, but other elements can be obtained by similar calculations.

$$[\text{Leaf } \Delta N]_{M,N} = [\text{Leaf } \Delta DW]_{M,N} \times [\text{Leaf N\%}]_{M,N} \tag{44A}$$

$$[\text{Stem } \Delta N]_{M,N} = [\text{Stem } \Delta DW]_{M,N} \times [\text{Stem N\%}]_{M,N} \tag{44B}$$

$$[\text{Fruits } \Delta N]_{F,N} = [\text{Fruits DW}]_{F,N} \times [\text{Fruits N\%}]_{F,N} \tag{44C}$$

$$[\text{Root } \Delta N]_{M,N} = [\text{Root DW}]_{M,N} \times [\text{Root N\%}]_{M,N} \tag{44D}$$

In the above equation (44A), $[\text{Leaf } \Delta N]_{M,N}$ is the nutrient absorption amount of the leaf, $[\text{Leaf } \Delta DW]_{M,N}$ is the increase in dry matter of the leaf, and $[\text{Leaf N\%}]_{M,N}$ is the nutrient content of the leaf. The same applies to other equations (44B) to (44D).
The nutrient content ($[\text{Leaf N\%}]_{M,N}$, etc.) is expressed as a function of the growth stage (Growth Index) of the organ, for example, by the following equation. Note that $\beta$ and $\gamma$ are constants.

$$[\text{Leaf N\%}]_{M,N} = \beta_L \times \ln([\text{Leaf Growth Index}]_{M,N}) + \gamma_L \tag{45A}$$

$$[\text{Stem N\%}]_{M,N} = \beta_S \times \ln([\text{Stem Growth Index}]_{M,N}) + \gamma_S \tag{45B}$$

$$[\text{Fruits N\%}]_{F,N} = \beta_F \times \ln([\text{Fruits Growth Index}]_{F,N}) + \gamma_F \tag{45C}$$

$$[\text{Root N\%}]_{M,N} = \gamma_R \tag{45D}$$

The nutrient absorption amounts of the leaves, crowns, flower clusters, and roots are expressed by the following equations.
[Equation 8]

$$[\text{Total Leaf } \Delta N]_N = \sum_{M=1}^{NL} [\text{Leaf } \Delta N]_{M,N} \tag{46A}$$

$$[\text{Total Stem } \Delta N]_N = \sum_{M=1}^{NL} [\text{Stem } \Delta N]_{M,N} \tag{46B}$$

$$[\text{Total Fruits } \Delta N]_N = \sum_{M=1}^{\overline{NL}} [\text{Fruits } \Delta N]_{F,N} \qquad (46C)$$

$$[\text{Total Root } \Delta N]_N = \text{Root } \Delta N \qquad (46D)$$

Further, the nutrient absorption amount $[\text{Total } \Delta N]_N$ per plant is expressed by the following equation (47).

$$\begin{aligned}[\text{Total } \Delta N]_N \\ = [\text{Total Leaf } \Delta N]_N + [\text{Total Stem } \Delta N]_N + [\text{Total Fruits } \Delta N]_N + [\text{Total} \\ \text{Root } \Delta N]_N \end{aligned} \qquad (47)$$

Note that $[\text{Total } \Delta N]_N$ is the "nutrient absorption amount" estimated from the increase in dry weights per plant. The "nutrient absorption amount per area" can be obtained by multiplying the above value by the planting density. Further, the "fertilizer application amount" can be obtained by dividing the "nutrient absorption amount" by the [Fertilizer Utilization Efficiency].

(Processing of Output Unit 45)

When receiving the simulation results transmitted from the simulation unit 44, the output unit 45 generates a screen for displaying the simulation results. For example, the output unit 45 generates a screen for displaying information as illustrated in FIG. 11 as the simulation results. In this case, the screen illustrated in FIG. 11 is displayed on the display unit 193 of the user terminal 70, and thus the producer can check which cultivar is cultivated at which cultivation location, how it grows, and how much yield is obtained. Further, since the simulation results obtained when a plurality of items are cultivated under different cultivation conditions are displayed side by side, the producer can compare what cultivation results are obtained when the cultivar and the cultivation conditions are made different.

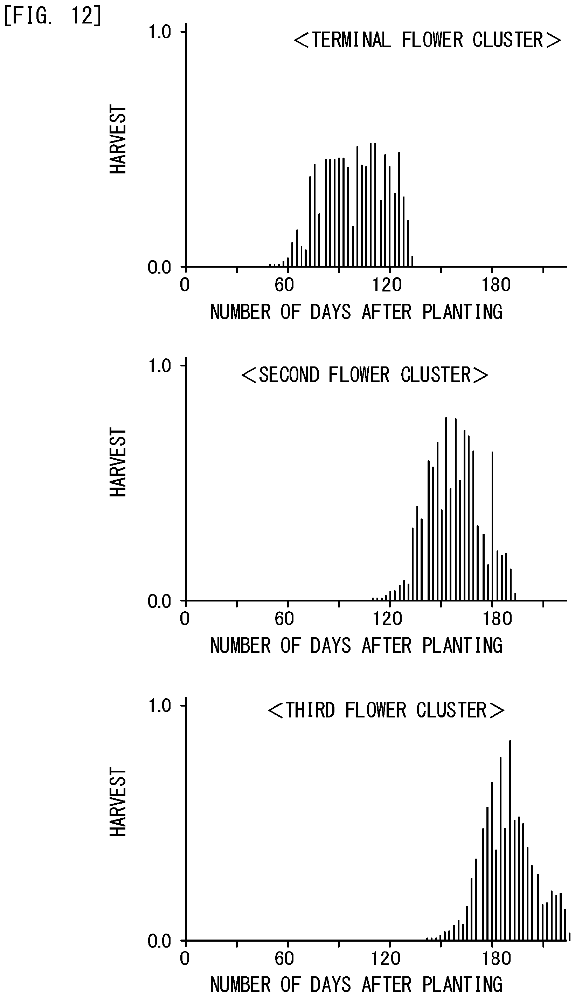

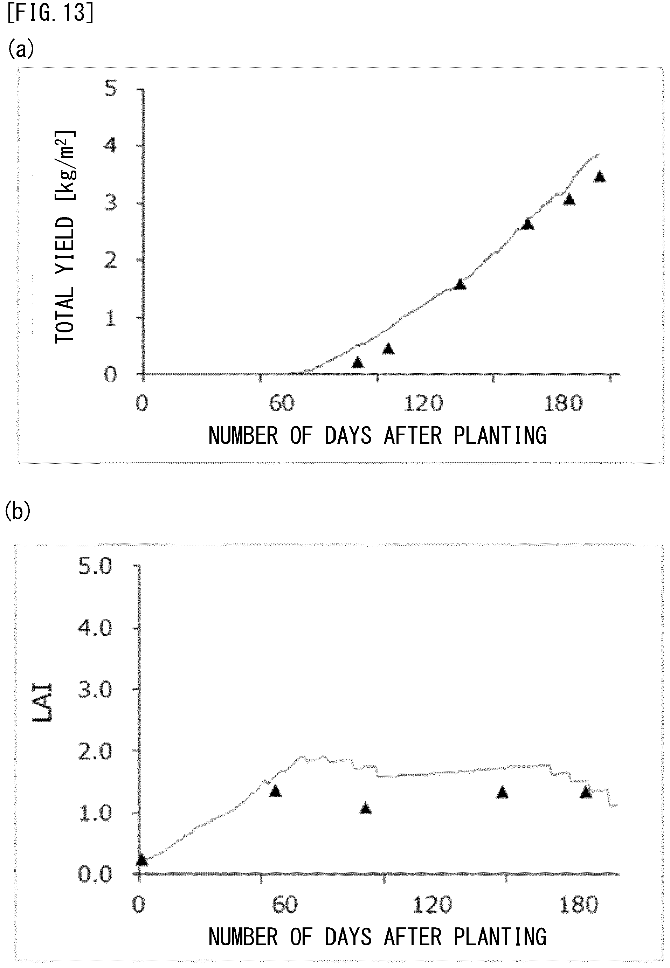

The output unit 45 can also generate a screen as illustrated in FIG. 12, for example, which shows the shipment amount by flower cluster when the cultivar selected by the producer is cultivated at the selected cultivation location, and output the screen to the user terminal 70. The producer can check the transition of the harvest in the top flower cluster, the second flower cluster, the third flower cluster by referring to the screen in FIG. 12. In FIG. 12, the harvests of the respective flower clusters are displayed in separate graphs, but the graphs may be displayed together in one graph. In this case, the bar graph indicating the harvest of each flower cluster may be displayed in a color-coded manner or the like so as to be easily understood. Further, the output unit 45 may display the transition of the total harvest in a graph as illustrated in FIG. 13(a), or may display the transition of the LAI in a graph as illustrated in FIG. 13(b). In addition, other information on growth (for example, leaf area, flowering date for each flower cluster, photoassimilate, growth amount (crown, leaf, fruit, total fruit sink strength), nutrient absorption amount (fertilizer application amount), and the like) may be displayed as numerical values or displayed as graphs.

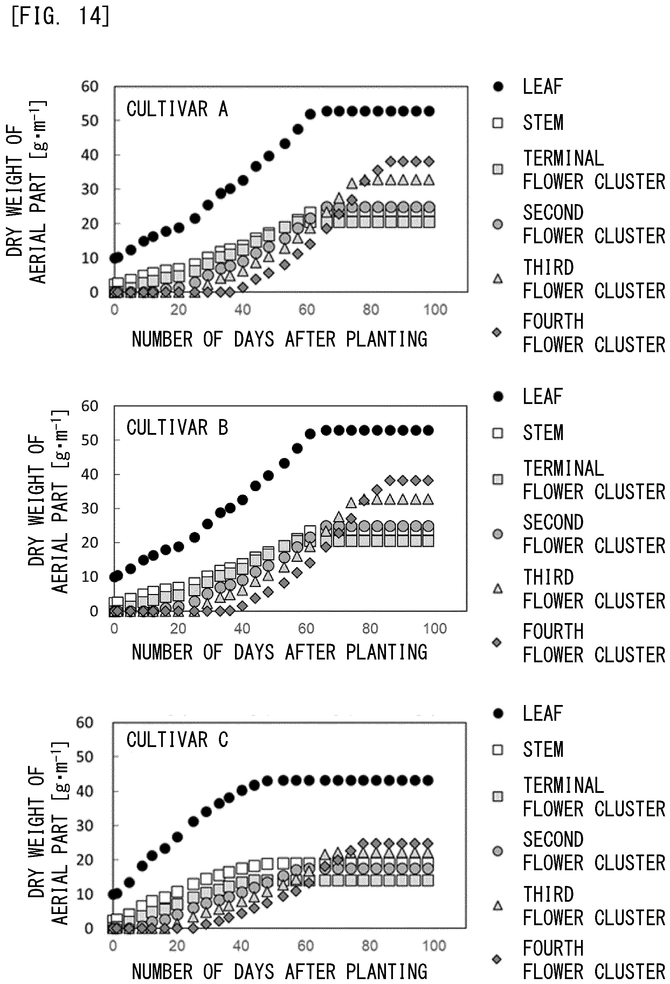

Further, the output unit 45 may display, for example, as illustrated in FIG. 14, simulation results of the dry weights of the leaves, the crown, and each flower cluster when the cultivars A, B, and C are cultivated at a certain cultivation location.

As described above, the output unit 45 may display the respective simulation results for combinations of the cultivar, the cultivation location, and the cultivation information in a comparable manner as illustrated in FIG. 11, or may display the simulation results when a certain cultivar is cultivated at a certain cultivation location as illustrated in FIG. 12 to FIG. 13(b). As illustrated in FIG. 14, simulation results obtained when different cultivars are cultivated at the same cultivation location may be displayed so as to be compared with each other. Furthermore, simulation results obtained when a certain cultivar is cultivated at different cultivation locations may be displayed in a comparable manner. In any case, the characteristics of the cultivar can be appropriately expressed as compared with a conventional catalog in which the characteristics of the cultivar are expressed by words, images, average values, or the like. Therefore, the producer can appropriately select the cultivar and the cultivation location by checking the simulation results. Further, since it is possible to know how the crops will grow in the future, it is possible to appropriately perform cultivation management (securing of workers, procurement of materials, and the like).

(Process of Updating Unit 46)

When the measured values (actual cultivation results) such as the transition of the yield and the transition of the LAI are input from the producer, the updating unit 46 compares the measured values with the corresponding simulation results, and adjusts and updates various parameters so that the simulation results approach the measured values. In this manner, the parameters are appropriately updated based on the actual measurement values, and thus it is possible to obtain appropriate simulation results in the next and subsequent simulations.

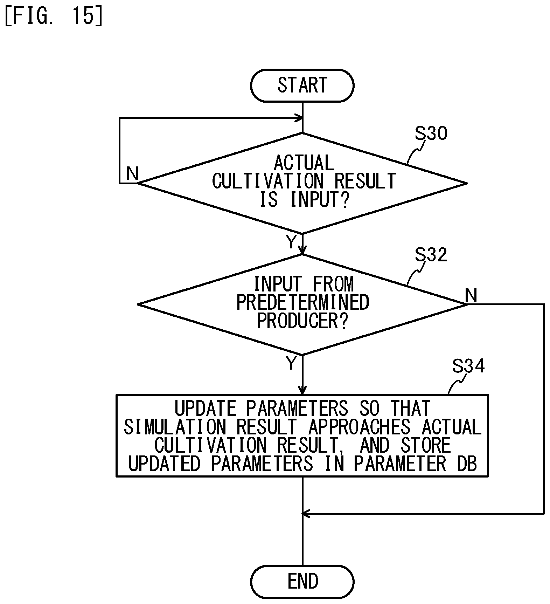

If the parameters are updated based on the information input from all the producers, the parameters may not be appropriately updated. Therefore, the updating unit 46 may update the parameters based on the input information only when the information is input from predetermined producers (producers with high reliability). In this case, the updating unit 46 executes processing along a flowchart as illustrated in FIG. 15.

In the process of FIG. 15, first, in step S30, the updating unit 46 waits until the producer inputs actual cultivation results (actual measurement values) via the user terminal 70. When the actual cultivation results are input, the process proceeds to step S32, and the updating unit 46 determines whether the input is from a predetermined producer (a producer with high reliability). When the determination in step S32 is negative, the entire process in FIG. 15 is terminated, but when the determination is affirmative, the process proceeds to step S34. When proceeding to step S34, the updating unit 46 updates the parameters so that the simulation results approach the actual cultivation results, stores the updated parameters in the parameter DB 50, and ends the entire process of FIG. 15.

When a parameter is updated using information input from the certain producer, the updating unit 46 may manage the updated parameter as a parameter dedicated to the producer. This allows each producer to customize the parameters in accordance with the actual cultivation results. It is also possible for a certain producer to invoke and use the parameters of another producer.

The producer may directly modify the parameters. When the producer modifies the parameters, the updating unit 46 updates the parameter DB 50 according to the modification.

As can be seen from the above description, the simulation unit 44 of the present embodiment functions as a reading unit that reads the parameters indicating the characteristics of each cultivar of crop from the storage unit (parameter DB 50). The simulation unit 44 of the present embodiment functions as a prediction unit that creates a growth model for each cultivar based on the read parameters and information (environmental data) regarding the cultivation environment and executes prediction regarding growth for each cultivar from the growth model for each cultivar.

As described above in detail, according to the present embodiment, the simulation unit 44 receives input of the initial value of the number of leaves of the seedling of a crop and the initial value of the weight (fresh weight) of the seedling of the crop, reads parameters indicating characteristics of each cultivar of the crop from the parameter DB 50, and acquires environmental data corresponding to the cultivation location selected by a producer from the environmental information acquisition unit 42. The simulation unit 44 creates a growth model for each cultivar based on the initial value of the number of leaves of the seedling and the initial value of the weight of the seedling, the acquired environmental data, and the read parameters, and executes a simulation using the created growth model. The output unit 45 outputs the simulation results as information for supporting the selection of the cultivar and the cultivation management. As described above, in the present embodiment, the results of the simulation on the growth of the crop obtained by inputting the initial value of the number of leaves of the seedling and the initial value of the weight of the seedling to the growth model created for each cultivar and each cultivation location are displayed as the information for supporting the selection of the cultivar and cultivation management, and therefore, it is possible to express the characteristics of the cultivar appropriately compared with a conventional catalog in which the characteristics of the cultivar are expressed by words, images, average values, and the like. Therefore, the producer can appropriately select the cultivar and the cultivation location, and can know how the plant grows in the future, and thus can appropriately perform cultivation management. In addition, since the initial values of the number of leaves of the seedling and the weight of the seedling are values that can be easily and accurately obtained by the producer, it is possible to reduce the occurrence of measurement errors, input errors, and the like and to perform simulation with high accuracy.

In the present embodiment, the simulation unit 44 estimates the cumulative temperature from the leaf emergence date of each leaf on the first day of calculation based on the initial value INL of the number of leaves of the seedling, and calculates $[\text{Leaf Growth Index}]_{M,1}$ as the growth amount of each leaf based on the cumulative temperature (the above equation (13C)). The simulation unit 44 calculates the leaf area $[\text{Leaf Area}]_{M,1}$ of each leaf on the first day of calculation based on the initial value [IW] of the weight (fresh weight) of the seedling and the calculated $[\text{Leaf Growth Index}]_{M,1}$ (the above equations (13D), (13E), and (15B)). Then, the simulation unit 44 inputs the calculated leaf area $[\text{Leaf Area}]_{M,1}$ of each leaf to the growth model for each cultivar. Thus, the leaf area of each leaf on the first day of calculation can be easily calculated from the initial value of the number of leaves of the seedling and the initial value of the weight of the seedling, and therefore, the producer does not have to input the leaf area of each leaf on the first day of calculation.

In the present embodiment, the simulation unit 44 estimates the growth amounts of each leaf and each fruit cluster based on the environmental data after the first calculation day, calculates the sum of the growth amounts and the ratio of each growth amount to the sum based on the estimated growth amounts, and estimates the dry matter distribution based on the calculated result and the environmental data. Thus, the simulation on and after the first day of calculation can be performed with high accuracy.

In the present embodiment, the updating unit 46 updates the parameters based on the actual cultivation results (yield, etc.) input by the producer, and updates the parameter DB 50. Thus, the parameters can be updated to appropriate values based on the cultivation record. In this case, the updating unit 46 updates the parameters so that the simulation results are closer to the actual cultivation results, allowing the accuracy of the simulation to be improved.

In the present embodiment, when the producer is a predetermined producer (a producer having reliability equal to or higher than a predetermined value) (S32: Yes), the updating unit 46 updates the parameters based on the actual cultivation results input by the producer (S34). This can increase the possibility that the parameters are appropriately updated.

In the present embodiment, the output unit 45 performs a simulation for each combination of the cultivar, the cultivation location, and the cultivation information selected by the producer, and outputs the simulation results in a comparable manner. This allows the producer to determine which cultivar should be cultivated and how to cultivate the cultivar by comparing the simulation results for respective combinations of a plurality of cultivars, cultivation locations, and cultivation information.

The above embodiment describes a case in which the server 10 includes the updating unit 46, but this does not intend to suggest any limitation. That is, the server 10 may not necessarily include the updating unit 46.

The above embodiment describes a case in which the server 10 has the function of the agricultural support device of the present invention, but this does not intend to suggest any limitation. The user terminal 70 may have the function of the agricultural support device. That is, the above-described process may be implemented by the stand-alone user terminal 70 operating alone.

The processing functions described above can be implemented by a computer. In this case, a program describing the processing contents of the functions to be included in the processing device is provided. The program is executed by the computer, and thus the processing functions are implemented on the computer. The program describing the processing contents may be recorded in a computer-readable storage medium (excluding a carrier wave).

When the program is distributed, for example, the program is sold in a form of a portable storage medium such as a digital versatile disc (DVD) or a compact disc read only memory (CD-ROM) in which the program is recorded. The program may be stored in a storage device of a server computer, and the program may be transferred from the server computer to another computer via a network.

A computer that executes the program stores the program recorded in a portable storage medium or the program transferred from the server computer in its own storage device, for example. The computer then reads the program from the storage device and executes processes according to the program. The computer may read the program directly from the portable storage medium and execute the processes according to the program. Further, the computer can also sequentially execute the processes according to the received program each time the program is transferred from the server computer.

The above-described embodiment is a preferred example of the present invention. However, the present invention is not limited to this, and various modifications can be made without departing from the scope of the present invention.

[DESCRIPTION OF LETTERS OR NUMERALS]

| | |
|---|---|
| 10 | Server (Agriculture support device) |
| 42 | Environmental data acquisition unit |
| 44 | Simulation unit (processing unit) |
| 45 | Output unit |
| 50 | Parameter DB (storage unit) |
| 100 | Agricultural system |

**Claims**

1. An agricultural support program that causes a computer to execute a process, the process including:

receiving an input of an initial value of the number of leaves of a seedling of a crop and an initial value of a weight of the seedling;
reading a parameter indicating characteristics of cultivars of the crop from a storage unit;
acquiring information on a cultivation environment of a crop;
creating a growth model for each of the cultivars based on the initial value of the number of leaves of the seedling, the initial value of the weight of the seedling, the parameter, and information on the cultivation environment, and predicting growth for each of the cultivars from the growth model for each of the cultivars; and

outputting a prediction result obtained by the predicting as information for supporting selection of a cultivar or cultivation management.

2. The agricultural support program according to claim 1, **characterized in that**:

the process further includes receiving input of information on the number of leaves of the seedling and the weight of the seedling on a predetermined day as the initial values, and
in the predicting,

a cumulative temperature from a leaf emergence date of each leaf on the predetermined day is estimated based on the number of leaves of the seedling on the predetermined day, and a growth amount of each leaf is calculated based on the cumulative temperature,
a leaf area of each leaf on the predetermined day is calculated based on the weight of the seedling on the predetermined day and the calculated growth amount of each leaf, and
the calculated leaf area of each leaf on the predetermined day is input to the growth model for each cultivar.

3. The agricultural support program according to claim 2, **characterized in that**
in the predicting,

growth amounts of each leaf and each fruit cluster in the seedling are estimated based on an actual measurement value or a prediction value on the cultivation environment after the predetermined day, and
a sum of the growth amounts and a ratio of each of the growth amounts to the sum are calculated based on the estimated growth amounts, and a dry matter distribution is estimated based on a result of the calculation and the information on the cultivation environment.

4. An agricultural support method **characterized in that** a computer executes a process, the process including:

receiving an input of an initial value of the number of leaves of a seedling of a crop and an initial value of a weight of the seedling;
reading a parameter indicating characteristics of cultivars of the crop from a storage unit;
acquiring information on a cultivation environment of a crop;
creating a growth model for each of the cultivars based on the initial value of the number of leaves of the seedling, the initial value of the weight of the seedling, the parameter, and information on the cultivation environment, and predicting growth for each of the cultivars from the growth model for each of the cultivars; and
outputting a prediction result obtained by the predicting as information for supporting selection of a cultivar or cultivation management.

5. An agricultural support device comprising:

a processing unit that receives input of an initial value of the number of leaves of a seedling of a crop and an initial value of a weight of the seedling, reads a parameter indicating characteristics of cultivars of the crop from a storage unit, acquires information on a cultivation environment of the crop, creates a growth model for each cultivar based on the initial value of the number of leaves of the seedling and the initial value of the weight of the seedling, the parameter, and the information on the cultivation environment, and predicts growth for each cultivar from the growth model for each cultivar; and
an output unit that outputs a prediction result obtained by the prediction as information for supporting selection of a cultivar or cultivation management.

[FIG. 1]

[FIG. 2]

(a)

70

190

CPU

193

DISPLAY
UNIT

195

INPUT UNIT

198

192

ROM

194

RAM

196

STORAGE
UNIT

197

NETWORK
INTERFACE

199

PORTABLE
STORAGE
MEDIUM DRIVE

PORTABLE
STORAGE
MEDIUM

191

(b)

10

90

CPU

98

92

ROM

94

RAM

96

STORAGE
UNIT

97

NETWORK
INTERFACE

99

PORTABLE
STORAGE
MEDIUM DRIVE

PORTABLE
STORAGE
MEDIUM

91

[FIG. 3]

```
┌──────────────┐    ┌──────────────┐    ┌──────────────┐
│  SELECTION   │    │ ENVIRONMENTAL│    │  CULTIVATION │
│  RECEPTION   │    │   DATA       │    │ INFORMATION  │
│    UNIT      │    │ ACQUISITION  │    │ ACQUISITION  │
│      41      │    │  UNIT   42   │    │  UNIT   43   │
└──────┬───────┘    └──────┬───────┘    └──────┬───────┘
       │                   │                   │
       │                   │                   │
       │           ┌───────┴───────────────────┴────┐    ┌──────────┐
       └───────────┤      SIMULATION UNIT   44       ├────┤PARAMETER │
                   └────────────────┬────────────────┘    │   DB  50 │
                                    │                     └────┬─────┘
                   ┌────────────────┴────────┐    ┌───────────┴──────┐
                   │    OUTPUT UNIT    45     ├────┤ UPDATING UNIT 46 │
                   └─────────────────────────┘    └──────────────────┘
```

[FIG. 4]

```
                        ┌─────────┐
                        │  START  │
                        └────┬────┘
                             │
         ┌──────────────────►│
         │              ╱────┴────╲              S10
         │           ╱   COMBINA-   ╲
      N  │◄─────────  TION OF CULTIVAR AND  ──────
         │           ╲ CULTIVATION LOCATION IS ╱
                        ╲  SELECTED?  ╱
                         ╲────┬────╱
                           Y  │
                              ▼
              ┌───────────────────────────────┐  S12
              │ ACQUIRE COMBINATION OF CULTIVAR│
              │   AND CULTIVATION LOCATION     │
              └───────────────┬───────────────┘
                              │
              ┌───────────────┴───────────────┐  S14
              │   ACQUIRE METEOROLOGICAL DATA  │
              │ CORRESPONDING TO CULTIVATION LOCATION│
              └───────────────┬───────────────┘
                              │
         ┌───────────────────►│
         │              ╱─────┴────╲            S16
         │           ╱  CULTIVATION  ╲
      N  │◄─────────   INFORMATION IS  ──────
         │           ╲     INPUT?    ╱
                        ╲────┬────╱
                           Y  │
                              ▼
              ┌───────────────────────────────┐  S18
              │   ACQUIRE CULTIVATION INFORMATION │
              └───────────────┬───────────────┘
                              │
              ┌───────────────┴───────────────┐  S20
              │  CREATE GROWTH MODEL AND PERFORM │
              │           SIMULATION           │
              └───────────────┬───────────────┘
                              │
              ┌───────────────┴───────────────┐  S22
              │ CREATE SCREEN FOR DISPLAYING SIMULATION│
              │ RESULTS AND TRANSMIT SCREEN TO USER TERMINAL│
              └───────────────┬───────────────┘
                              │
                        ┌─────┴───┐
                        │   END   │
                        └─────────┘
```

[FIG. 5]

[FIG. 6]

[FIG. 7]

SIGMOID CURVE (FOR PRESENT SIMULATION)

[Leaf Increase Index]
AND
[Fruits Increase Index]
ON Nth DAY

VALUE AT 24:00
ON Nth DAY

VALUE AT 0:00
ON Nth DAY

S(x)

X

[FIG. 8]

| CALCU-LATION DAY | DATE | TEMPER-ATURE | OUTSIDE GLOBAL SOLAR RADIATION | CO2 CONCEN-TRATION |
|---|---|---|---|---|
| | | °C | MJ/m² | ppm |
| 1 | 2017/8/26 | 30. 7 | 24. 2 | 404. 00 |
| 2 | 2017/8/27 | 30. 4 | 27. 0 | 404. 03 |
| 3 | 2017/8/28 | 30. 6 | 22. 1 | 404. 06 |
| 4 | 2017/8/29 | 30. 9 | 23. 8 | 404. 09 |
| 5 | 2017/8/30 | 30. 1 | 15. 7 | 404. 12 |
| 6 | 2017/8/31 | 30. 4 | 20. 3 | 404. 15 |
| 7 | 2017/9/1 | 30. 0 | 18. 6 | 404. 18 |
| 8 | 2017/9/2 | 27. 5 | 2. 3 | 404. 21 |
| 9 | 2017/9/3 | 29. 0 | 21. 4 | 404. 24 |
| 10 | 2017/9/4 | 29. 9 | 25. 3 | 404. 27 |
| 11 | 2017/9/5 | 30. 2 | 17. 6 | 404. 30 |
| 12 | 2017/9/6 | 30. 4 | 23. 5 | 404. 33 |
| 13 | 2017/9/7 | 30. 5 | 24. 5 | 404. 36 |
| 14 | 2017/9/8 | 30. 4 | 23. 7 | 404. 39 |
| 15 | 2017/9/9 | 30. 2 | 24. 2 | 404. 42 |
| 16 | 2017/9/10 | 30. 5 | 25. 8 | 404. 45 |
| 17 | 2017/9/11 | 30. 5 | 26. 1 | 404. 48 |
| 18 | 2017/9/12 | 30. 9 | 22. 3 | 404. 51 |
| 19 | 2017/9/13 | 27. 9 | 2. 7 | 404. 54 |
| 20 | 2017/9/14 | 27. 6 | 5. 5 | 404. 57 |
| 21 | 2017/9/15 | 29. 9 | 22. 2 | 404. 60 |
| 22 | 2017/9/16 | 29. 0 | 23. 1 | 404. 63 |
| 23 | 2017/9/17 | 27. 7 | 24. 2 | 404. 66 |
| 24 | 2017/9/18 | 27. 0 | 16. 2 | 404. 69 |
| 25 | 2017/9/19 | 28. 0 | 23. 8 | 404. 72 |

[FIG. 9]

| NUMBER | PARAMETER NAME | UNIT | NUMERICAL EXAMPLE |
|---|---|---|---|
| 1 | CALCULATION UNIT | DAY | 365 |
| 2 | NUMBER OF FLOWER CLUSTERS | CLUSTER | 6 |
| 3 | LIGHT USE EFFICIENCY | gDW/MJ | 1.5 |
| 4 | SLA | $m^2$/gDW | |
| 5 | LIGHT TRANSMISSIBILITY OF GREEN HOUSE | % | 0.65 |
| 6 | ABSORPTION COEFFICIENT | DIMENSIONLESS | 0.6 |
| 7 | PLANT DENSITY | PLANT/$m^2$ | |
| 8 | LEAF GROWTH AMOUNT INDEX | gDW/(°C · PLANT) | |
| 9 | CROWN GROWTH AMOUNT INDEX | gDW/(°C · PLANT) | |
| 10 | FRUIT GROWTH AMOUNT INDEX | gDW/(°C · PLANT) | |
| 11 | INTERVALS BETWEEN EMERGENCE OF LEAVES (ACCUMULATED AMBIENT TEMPERATURE) | °C | 150 |
| 12 | MATURATION TIME OF LEAF (ACCUMULATED AMBIENT TEMPERATURE) | °C | 450 |
| 13 | INTERVALS BETWEEN EMERGENCE OF FLOWER CLUSTERS (ACCUMULATED TEMPERATURE) | °C | 600 |
| 14 | MATURATION PERIOD OF FLOWER CLUSTER (ACCUMULATED TEMPERATURE) | °C | 600 |

[FIG. 10]

(a)

(b)

[FIG. 11]

EP 4 502 911 A1

| | | Estimation condition 1 | Estimation condition 2 | Estimation condition 3 | Estimation condition 4 | Estimation condition 5 |
|---|---|---|---|---|---|---|
| Cultivar | | Tochiotome | Tochiotome | Koiminori | Oi-C berry | Sachinoka |
| Cultivation point | | Tsukuba | Morioka | Tsukuba | Tsukuba | Kurume |
| Planting time | | Month/day 9/1 | Month/day 9/1 | Month/day 9/1 | Month/day 9/1 | Month/day 9/1 |
| Plant density | | seedling/m2 8 | seedling/m2 8 | seedling/m2 8 | seedling/m2 8 | seedling/m2 8 |
| Soil culture/nutriculture | | Soil culture | Nutriculture | Nutriculture | Soil culture | Soil culture |
| Number of leaves at planting | | leaf/plant 3 | leaf/plant 3 | leaf/plant 3 | leaf/plant 3 | leaf/plant 3 |
| Solar transmittance | | % 70.0 | % 70.0 | % 70.0 | % 70.0 | % 70.0 |
| Minimum night-time temperature | | ℃ 8 | ℃ 8 | ℃ 8 | ℃ 8 | ℃ 8 |
| Ventilation temperature | | ℃ 25 | ℃ 25 | ℃ 25 | ℃ 25 | ℃ 25 |
| CO2 application condition | | ppm 800 | ppm 800 | ppm 800 | ppm 800 | ppm 800 |
| Flowering date | Terminal flower cluster | Month/day 10/15 | Month/day 10/15 | Month/day 10/15 | Month/day 10/15 | Month/day 10/15 |
| | Second flower cluster | Month/day 11/20 | Month/day 11/20 | Month/day 11/20 | Month/day 11/20 | Month/day 11/20 |
| | Third flower cluster | Month/day 1/5 | Month/day 1/5 | Month/day 1/5 | Month/day 1/5 | Month/day 1/5 |
| | Fourth flower cluster | Month/day 2/20 | Month/day 2/20 | Month/day 2/20 | Month/day 2/20 | Month/day 2/20 |
| | Fifth flower cluster | Month/day 3/31 | Month/day 3/31 | Month/day 3/31 | Month/day 3/31 | Month/day 3/31 |
| | Sixth flower cluster | Month/day 4/10 | Month/day 4/10 | Month/day 4/10 | Month/day 4/10 | Month/day 4/10 |
| Start of harvest | | | | | | |
| Yield | November | kg/m$^2$ 0.3 | kg/m$^2$ 0.3 | kg/m$^2$ 0.3 | kg/m$^2$ 0.3 | kg/m$^2$ 0.3 |
| | December | kg/m$^2$ 0.7 | kg/m$^2$ 0.7 | kg/m$^2$ 0.7 | kg/m$^2$ 0.7 | kg/m$^2$ 0.7 |
| | January | kg/m$^2$ 0.6 | kg/m$^2$ 0.6 | kg/m$^2$ 0.6 | kg/m$^2$ 0.6 | kg/m$^2$ 0.6 |
| | February | kg/m$^2$ 0.4 | kg/m$^2$ 0.4 | kg/m$^2$ 0.4 | kg/m$^2$ 0.4 | kg/m$^2$ 0.4 |
| | March | kg/m$^2$ 0.7 | kg/m$^2$ 0.7 | kg/m$^2$ 0.7 | kg/m$^2$ 0.7 | kg/m$^2$ 0.7 |
| | April | kg/m$^2$ 0.8 | kg/m$^2$ 0.8 | kg/m$^2$ 0.8 | kg/m$^2$ 0.8 | kg/m$^2$ 0.8 |
| | May | kg/m$^2$ 1 | kg/m$^2$ 1 | kg/m$^2$ 1 | kg/m$^2$ 1 | kg/m$^2$ 1 |
| | June | kg/m$^2$ 0.6 | kg/m$^2$ 0.6 | kg/m$^2$ 0.6 | kg/m$^2$ 0.6 | kg/m$^2$ 0.6 |
| Yield total | | kg/m$^2$ 5.1 | kg/m$^2$ 5.1 | kg/m$^2$ 5.1 | kg/m$^2$ 5.1 | kg/m$^2$ 5.1 |

[FIG. 12]

[FIG. 13]

(a)

(b)

[FIG. 14]

[FIG. 15]

START

S30
ACTUAL CULTIVATION RESULT IS INPUT?
N
Y

S32
INPUT FROM PREDETERMINED PRODUCER?
N
Y

S34
UPDATE PARAMETERS SO THAT SIMULATION RESULT APPROACHES ACTUAL CULTIVATION RESULT, AND STORE UPDATED PARAMETERS IN PARAMETER DB

END

| INTERNATIONAL SEARCH REPORT | International application No. |
|---|---|
| | **PCT/JP2023/006265** |

**A.     CLASSIFICATION OF SUBJECT MATTER**

*G06Q 50/02*(2012.01)i
　　FI:    G06Q50/02

According to International Patent Classification (IPC) or to both national classification and IPC

**B.     FIELDS SEARCHED**

Minimum documentation searched (classification system followed by classification symbols)

　　G06Q10/00-99/00

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2021-128770 A (NAT AGRICULTURE & FOOD RES ORG) 02 September 2021 (2021-09-02)<br>　　entire text, all drawings | 1-5 |
| A | JP 2021-179983 A (NAT AGRICULTURE & FOOD RES ORG) 18 November 2021 (2021-11-18)<br>　　entire text, all drawings | 1-5 |
| A | JP 2019-187259 A (KISSEI COMTEC CO LTD) 31 October 2019 (2019-10-31)<br>　　entire text, all drawings | 1-5 |

☐ Further documents are listed in the continuation of Box C.　　✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

International application No.

**PCT/JP2023/006265**

| Patent document cited in search report | | | Publication date (day/month/year) | Patent family member(s) | Publication date (day/month/year) |
|---|---|---|---|---|---|
| JP | 2021-128770 | A | 02 September 2021 | (Family: none) | |
| JP | 2021-179983 | A | 18 November 2021 | (Family: none) | |
| JP | 2019-187259 | A | 31 October 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002203002 A